# EUROPEAN PATENT APPLICATION

(11) **EP 1 844 825 A1**
(43) Date of publication of application: **17.10.2007**
(21) Application number: 06711947.9
(22) Date of filing: 19.01.2006
(51) Int. Cl.: A63F 13/10, A63F 13/00, A63F 13/12

(54) **GAME SYSTEM**

(30) Priority: 28.01.2005 JP 2005022300
(71) Applicant: SEGA CORPORATION, Ohta-ku, Tokyo 144-0043 (JP)
(72) Inventor: SATO, Naoyuki, u Tokyo, 1440043 (JP); UCHIDA, Kenji, u Tokyo, 1440043 (JP); OHGANE, Yoshinori, u Tokyo, 1440043 (JP); TSUCHIMOTO, Masanori, u Tokyo, 1440043 (JP)
(74) Representative: Hofer, Dorothea
(86) International application number: PCT/JP2006/300701
(87) International publication number: WO 2006/080224

(57) **Abstract**

The body 12 of a race game machine 10 has a integrated display 14 which outputs game images common among the players, and the images display states of races of racehorses. In front of the body 12, a plurality of satellites 20 which are respectively used by the players are provided. Each satellite 20 has a table 22 and a chair 24 integrated with each other. In the table 22, a liquid crystal display 26 which outputs game images, and a charge and discharge opening 28 for inserting medals and discharging medals corresponding to distributions and prizes are provided. When a plurality of race objects, such as horses and jockeys are combined and registered in a race game, runs and ride of horses and jockey of other players can be requested. The amusement of combining a plurality of race objects, such as horses and jockeys, to play games can be given to players.

## Description

### TECHNICAL FIELD

The present invention relates to a game system in which play values corresponding to progresses of a game are paid.

### BACKGROUND ART

Of the large game systems installed in game centers, etc. is known a horse race game system in which a miniature horserace course is positioned at the center, and in this course, miniature racehorses voted by respective players actually run. There is also a horse race game system using the recent developed computer graphics, in which, in place of the miniature racehorse course, race contents are outputted and displayed on the large monitor screen.

These horse race game systems, which give the players the amusement of anticipating and voting winning horses based on given information, and furthermore, recently enable players as racehorse owners to train and participate the players' own racehorses in races to earn in prize moneys, are becoming more popular.
Patent Reference 1: Specification of Japanese Patent Application Unexamined Publication No. 2000-288246

### DISCLOSURE OF THE INVENTION

### PROBLEMS TO BE SOLVED BY THE INVENTION

However, in the above-described horse race game systems, a jockey who rides a racehorse is decided merely one-sidedly by the system, or merely selected by a player out of jockeys registered in advance.

An object of the present invention is to provide a game system which can amuse the players with combining a plurality of race objects, such as racehorses and jockeys to play the game.

### MEANS FOR SOLVING THE PROBLEMS

The game system according to one aspect of the present invention is characterized in that information is exchangeable between a main device and a plurality of satellite devices, and a plurality of race objects each combining a first race object and a second race object are participated and compete in a race, the main device comprising: a control means which executes race game processing for, before a race, deciding a plurality of race objects each combining a first race object and a second race object to compete places among a plurality of race objects, and pay processing for paying game values, based on a result of the race, the satellite devices each comprising: a control means which executes processing for, based on an operational signal from an operation means operated by a player, deciding a second race object the player permits to participate in the race, and transmitting to the main device the information of the decided second race object, the control means of the main device executing: the race game processing for including a race object combining a second race object decided based on the information of the second race object transmitted from the satellite device and a first race object selected from said a plurality of first objects among a plurality of race objects to compete for places among said plurality of race objects; and the pay processing for, as a result of the race, when said race object included among said plurality of race objects wins, paying a part of a game value to be paid to said race object for the win to the second race object of said race object.

The game system according to one aspect of the present invention is characterized in that information is exchangeable between a main device and a plurality of satellite devices, the main device comprising: a first race object database storing first identification information of first race objects, and their corresponding ability parameters; a second race object database storing second identification information of second race objects, and their corresponding ability parameters; race participation registration database for registering for each race a combination of the first identification information of a first race object to be participated in the race and the second identification information of a second race object; a race participation registration control means for, before a race, selecting the first identification information from the first race object database, selecting the second identification information from the second race object database to decide a combination of the first race object and the second race object, and registering the combination in the race participation registration database; a race game control means for, each race, executing a race game processing for deciding places in the race and developments of the race by using the ability parameters corresponding to the first identification information and the ability parameters corresponding to the second identification information of the combination registered in the race participation registration database; and pay processing control means for executing a pay processing for paying a play value based on a race result, and the satellite device each comprising a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the main device, the main device further comprising a second race object registration control means for registering the permission information of permitting the second race object of the decided second identification information to be registered in the race participation registration database in the second race object database, corresponding to the second identification information transmitted from the satellite, the race participation registration control means selecting the second identification information combined with the first identification information selected from the first race object database, among the second identification information having said permission information registered in the second race object database, and registering a plurality of combinations including said combination in the race participation registration database, and the pay processing control means, when said combination including the second identification information registered having said permission information registered wins as a result of the race game processing by the race game control means, deciding a distribution play value of a play value to be paid to the combination, said distribution being to be paid to the second identification information having said permission information registered.

The game system according to one aspect of the present invention is characterized in that information is exchangeable between a main device and a plurality of satellite devices, the main device comprising: a first race object database storing first identification information of first race objects, and their corresponding ability parameters; a second race object database storing second identification information of second race objects, and their corresponding ability parameters; race participation registration database for registering for each race a combination of the first identification information of a first race object to be participated in the race and the second identification information of a second race object; a race participation registration control means for, before a race, selecting the first identification information from the first race object database, selecting the second identification information from the second race object database to decide a combination of the first race object and the second race object, and registering the combination in the race participation registration database; a race game control means for, each race, executing a race game processing for deciding places in the race and developments of the race by using the ability parameters corresponding to the first identification information and the ability parameters corresponding to the second identification information of the combination registered in the race participation registration database; and pay processing control means for executing a pay processing for paying a play value based on a race result, and the satellite device each comprising a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the main device, the main device further comprising a second race object registration control means for registering the permission information of permitting the second race object of the decided second identification information to be registered in the race participation registration database in the second race object database, corresponding to the second identification information transmitted from the satellite, the race participation registration control means selecting the second identification information combined with the first identification information selected from the first race object database, among the second identification information having said permission information registered in the second race object database, and registering a plurality of combinations including said combination in the race participation registration database, the pay processing control means, when said combination including the second identification information registered having said permission information registered wins as a result of the race game processing by the race game control means, deciding a distribution play value of a play value to be paid to the combination, said distribution being to be paid to the second identification information having said permission information registered, and the second race object registration control means registering the distribution play value decided by the pay processing control means in the second race object database, corresponding to the second identification information having said permission information registered.

In the above-described game system, it is possible that the satellite control means executes the processing for, based on an operational signal from the operation means operated by a player, deciding second identification information of the second race object to be selected by the control of the race participation registration control means to be registered in the race participation registration database, and the processing for transmitting an in-absence permission information and the second identification information to the main device, said in-absence permission information indicating that the second race object of the second identification information decided by the player may be registered in the race participation registration database even in the absence of the player, the second race object registration control means registering the in-absence permission information in the second race object database, corresponding to the second identification information transmitted from the satellite device.

In the above-described game system, it is possible that the main device further executes the processing for detecting whether or not the player who has transmitted the in-absence permission information is logging in, when it is detected that the player is logging in, the pay processing control means executes the processing for paying a decided distribution play value to the second race object of the second identification information having the in-absence permission information registered, and when it is detected that the payer is not logging in, the second race object registration control means registers the distribution play value decided by the pay processing control means in the second race object database, corresponding to the second identification information having the in-absence permission information registered.

In the above-described game system, it is possible that when a combination including second identification information including the permission information or the in-absence permission information wins as a result of the race game processing by the race game control means, the main device renews the ability parameters corresponding to the second identification information of the second race object database to improved values, and when the combination including the second identification information including the permission information or the in-absence permission information does not win as a result of the race game processing by the race game control means, the main device renews the ability parameters corresponding to the second identification information of the second race object database to lowered values.

In the above-described game system, it is possible that the satellite control means transmits to the main device, permission condition information of conditions for the permission together with the second identification information and the permission information or the in-absence permission information, which permits the registration in the race participation database, and the race participation registration control means selects, when second identification information to be combined with first identification information selected from the first race object database, selects the second identification information, based on the permission condition information.

The game system according to one aspect of the present invention is characterized in that information is exchanged between a server device and a plurality of client devices via a network, and a race game is made among a plurality of combinations of a first race object and a second race object, the server device comprises a control means which executes the race game processing for, before a race, deciding a plurality of combinations each of the first race object and the second race object, and racing for places, and the pay processing for paying play values, based on a result of the race, the client device each comprising a control means which execute the processing for, based on an operation signal from an operation means operated by an operator, deciding a second race object which the operator permits to participate in the race and transmitting to the server device information of the decided second race object, the control means of the server device executes the race game processing for racing a combination of a second race object decided based on the information of the second race object transmitted from the client device and a first race object selected from a plurality of first race objects among a plurality of combinations for places, and the pay processing for paying, when said combination raced among said a plurality of the combinations wins as a result of the race, paying a part of a play value to be paid for the win to the second race object.

The game system according to one aspect of the present invention is characterized in that information is exchangeable between a server device and a plurality of client devices, the server device comprising: a first race object database storing first identification information of first race objects, and their corresponding ability parameters; a second race object database storing second identification information of second race objects, and their corresponding ability parameters; race participation registration database for registering for each race a combination of the first identification information of a first race object to be participated in the race and the second identification information of a second race object; a race participation registration control means for, before a race, selecting the first identification information from the first race object database, selecting the second identification information from the second race object database to decide a combination of the first race object and the second race object, and registering the combination in the race participation registration database; a race game control means for, each race, executing a race game processing for deciding places in the race and developments of the race by using the ability parameters corresponding to the first identification information and the ability parameters corresponding to the second identification information of the combination registered in the race participation registration database; and pay processing control means for executing a pay processing for paying a play value based on a race result, and the client device each comprising a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the server device, the server device further comprising a second race object registration control means for registering the permission information of permitting the second race object of the decided second identification information to be registered in the race participation registration database in the second race object database, corresponding to the second identification information transmitted from the satellite, the race participation registration control means selecting the second identification information combined with the first identification information selected from the first race object database, among the second identification information having said permission information registered in the second race object database, and registering a plurality of combinations including said combination in the race participation registration database, and the pay processing control means, when said combination including the second identification information registered having said permission information registered wins as a result of the race game processing by the race game control means, deciding a distribution play value of a play value to be paid to the combination, said distribution being to be paid to the second identification information having said permission information registered.

### EFFECT OF THE INVENTION

In the game system according to the present invention, information is exchangeable between a main device and a plurality of satellite devices, and a plurality of race objects each combining a first race object and a second race object are participated and compete in a race, the main device comprising: a control means which executes race game processing for, before a race, deciding a plurality of race objects each combining a first race object and a second race object to compete places among a plurality of race objects, and pay processing for paying game values, based on a result of the race, the satellite devices each comprising: a control means which executes processing for, based on an operational signal from an operation means operated by a player, deciding a second race object the player permits to participate in the race, and transmitting to the main device the information of the decided second race object, the control means of the main device executing: the race game processing for including a race object combining a second race object decided based on the information of the second race object transmitted from the satellite device and a first race object selected from said a plurality of first objects among a plurality of race objects to compete for places among said plurality of race objects; and the pay processing for, as a result of the race, when said race object included among said plurality of race objects wins, paying a part of a game value to be paid to said race object for the win to the second race object of said race object, whereby the game system can amuse the players with combining a plurality of race objects, such as racehorses and jockeys to play the game.

### BRIEF DESCRIPTION OF THE DRAWINGS

FIG. 1 is a view illustrating the appearance of the race game device of the game system according to one embodiment of the present invention.
FIG. 2 is a view illustrating the constitution of the game system according to the embodiment of the present invention.
FIG. 3 is a view illustrating the constitution of the main cabinet of the game system according to the embodiment of the present invention.
FIG. 4 is a view illustrating the constitution of the satellite cabinet of the game system according to the embodiment of the present invention.
FIG. 5 is a view illustrating the standard constitutions of the main PC, the video PC, the sound PC, the satellite PC and various servers used in the game systems according to the embodiment of the present invention.
FIG. 6 is a flow chart summarizing the game of the game system according to the embodiment of the present invention.
FIG. 7 is a view illustrating the data structure of the IC card of the game system according to the embodiment of the present invention.
FIG. 8 is a view illustrating the data structure of the horse database of the game system according to the embodiment of the present invention.
FIG. 9 is a view illustrating the data structure of the jockey database of the game system according to the embodiment of the present invention.
FIG. 10 is a view illustrating the data structure of the race run table of the game system according to the embodiment of the present invention.
FIG. 11 is a view illustrating the data structure of the satellite correspondence table of the game system according to the embodiment of the preset invention.
FIG. 12 is a flow chart of the new card preparation processing of the game system according to the embodiment of the present invention.
FIG. 13 is a flow chart of the jockey request acceptance setting processing of the game system according to the embodiment of the present invention.
FIG. 14 is a flow chart (Part 1) of the race run registration processing of the game system according to the embodiment of the present invention.
FIG. 15 is a flow chart (Part 2) of the race run registration processing of the game system according to the embodiment of the present invention.
FIG. 16 is a flow chart of the race processing of the game system according to the embodiment of the present invention.
FIG. 18 is a view illustrating the jockey request acceptance OK image of the game system according to the embodiment of the present invention.
FIG. 19 is a view illustrating the jockey request condition setting image of the game system according to the embodiment of the present invention.
FIG. 20 is a view illustrating the in-absence jockey request acceptance OK image of the game system according to the embodiment of the present invention.
FIG. 21 is a view illustrating the run race selection image of he game system according to the embodiment of the present invention.
FIG. 22 is a view illustrating the ride jockey selection image (Part 1) of the game system according to the embodiment of the present invention.
FIG. 23 is is a view illustrating the ride jockey selection image (Part 2) of the game system according to the embodiment of the present invention.
FIG. 24 is a view of jockey request acceptance medal pay image of he game system according to the embodiment of the present invention.
FIG. 25 is a view illustrating the in-absence obtained medal pay image of he game system according to the embodiment of the present invention.

### REFERENCE NUMBERS

- 10: race game machine
- 12: main body
- 14: integrated display
- 14A, 14B, 14C: displays
- 16A, 16B, 16C, 16D: speaker towers
- 20: satellite
- 22: table
- 24: chair
- 26: liquid crystal display
- 27: touch panel
- 28: medal slot
- 30: main cabinet (main device)
- 32: main PC
- 34: LCD
- 36: pointing device
- 38A, 38B, 38C: video PC
- 40: sound PC
- 42: amplifier
- 44A, 44B, 44C, 44D: speakers
- 46: center speaker
- 48: woofer speaker
- 50: IO board
- 52: LED
- 54: cold cathode
- 56: halogen
- 58A, 58B, 58C, 58D: lightings
- 60: satellite cabinet (satellite device)
- 62: satellite PC
- 64: image unit
- 66: amplifier
- 67: speaker
- 68: sound unit
- 70: cold cathode
- 74: fluorescent lamp
- 76: LCD-side winner lamp
- 78: casing-side winner lamp
- 79: lightings
- 80: IC card unit
- 82: IC card reader/writer
- 84: card lock mechanism
- 86: once charge unit
- 88: hopper
- 86A: letting-out mechanism
- 86B: selector
- 90: server
- 92: database server
- 94: ranking server
- 96: web server
- 98: mobile phone server
- 100: PC
- 102: game board
- 104: video card
- 106: sound card
- 108: ROM
- 110: DVD-ROM
- 112: data storage
- 114: PCI(Peripheral Component Interconnect) I/O card
- 116: Base BD (All-net)
- 118: electric power source
- 120: case
- 122: mother board
- 124: CPU
- 126: memory
- 128: HDD, silicon disc or CF
- 130: OS (Operation System)
- 132: application
- 134: silicon disc or CF
- 136: backup data

### BEST MODE FOR CARRYING OUT THE INVENTION

### [An Embodiment]

The game system according to one embodiment of the present invention will be explained with reference to the drawings.

The game system according to the present embodiment includes: a bet race game (bet game) in which a player anticipates a place of a racehorse in a race of racehorses which are running objects whose runs are controlled by the control unit, bets medals and receives an allotment based on a result of the race; and a training game (stable game) in which the player owns racehorses and jockeys to be participated in races and trains them to compete for the races and obtains medals as horse owner prizes corresponding to places of the racehorses.

### (Summary of the Game System)

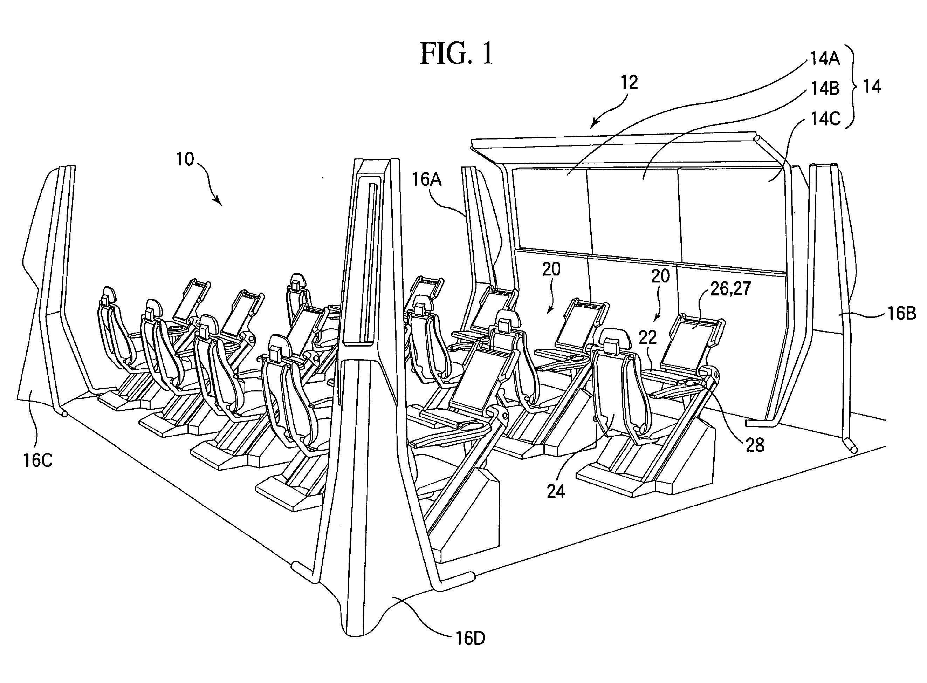

The appearance of the race game machine of the game system according to the present embodiment will be explained with reference to FIG. 1.

As illustrated in FIG. 1, the body 12 of the race game machine 10 of the present embodiment includes a integrated display 14 which outputs common game images to players to display images of race states of racehorses. The integrated display 14 includes 3 displays 14A, 14B, 14C.

In front of the body 12, a plurality of satellites 20 which are used by respective players are disposed. On both sides of the integrated display 14 and on both sides of the part at the rear of the plural satellites 20, 4 speaker towers 16A, 16B, 16C, 16D which are sound output means for outputting sounds of the game are provided.

Each satellite includes a table 22 and a chair 24 integrated with each other. The table 22 includes a liquid crystal display 26 which is a display means for outputting game images of the bet race game (bet game) and the training game (stable game), and a medal slot 28 for charging medals and discharging medals corresponding to an allotment or a prize money.

A touch panel 27 as the operation means is provided on the liquid crystal display 26, and each player touches the touch panel 27 with the fingers to operate the game. For example, as the game advances, command keys are suitably displayed on the liquid crystal display 26, and the player directly touches the touch panel 27 on the command keys with the fingers, whereby various kinds of command signals are inputted into the game control circuit.

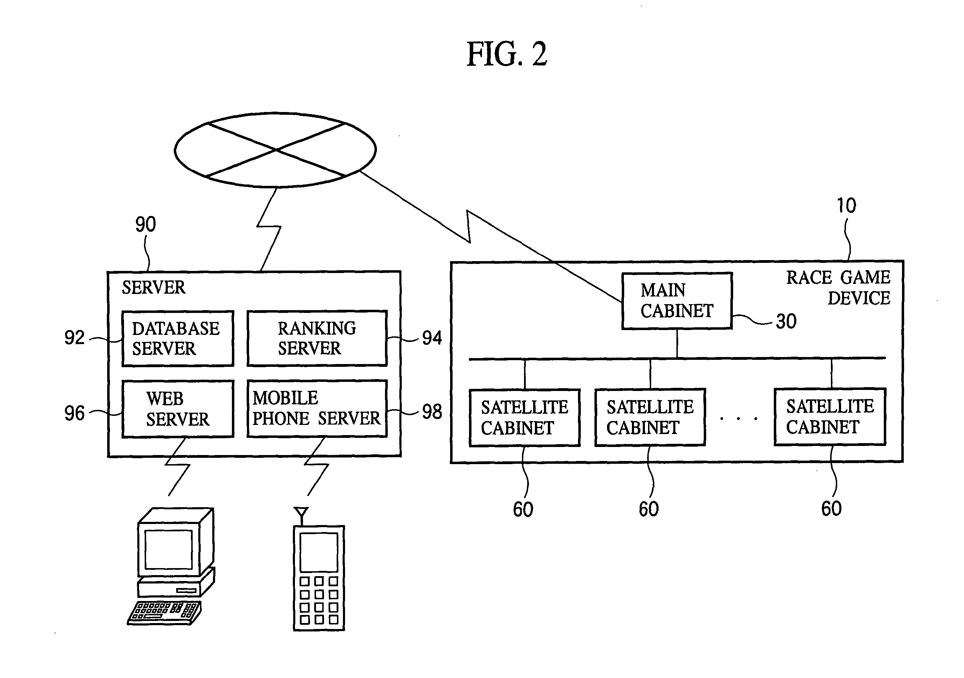

The constitution of the game system according to the present embodiment will be explained with reference to FIG. 2.

The race game machine 10 comprises a main cabinet 30 which generally controls the race game machine 10, and a satellite cabinet 60 which controls the respective satellites 20. The main cabinet 30 and a plurality of satellite cabinets 60 are connected to each other by a network.

The same race game machines 10 are installed in game centers, etc. all over Japan, and the respective race game machines 10 are connected to an internet.

The game system further comprises a server 90 for the control, etc. of game data transmitted from the race game machines 10 installed all over Japan. The server 90 is connected to the internet

The server 90 includes a database server 92 which stores and controls game data transmitted from the race game machines 10 installed all over Japan, a ranking server 94 which makes the statistic processing of various kinds of ranking, etc., a web server 96 for the connection with the personal computers installed at homes, etc., and a mobile phone server 98 for the connection with the portable information terminals, such mobile phones, PHSs, etc.

In the game system according to the present embodiment, the main cabinet (main device) and a plurality of satellite cabinets (satellite devices) can exchange information therebetween. However, the game system may have other constitutions. For example, in place of the main cabinet (main device), a server device is used, and in place of the plurality of satellite devices, client devices, such as home video game machines, arcade video game machines, PCs, PDAs, mobile phones, PHSs, etc., are used, whereby information is received and transmitted between the server device and the plurality of client devices.

### (Constitution of Main Cabinet (Main Device))

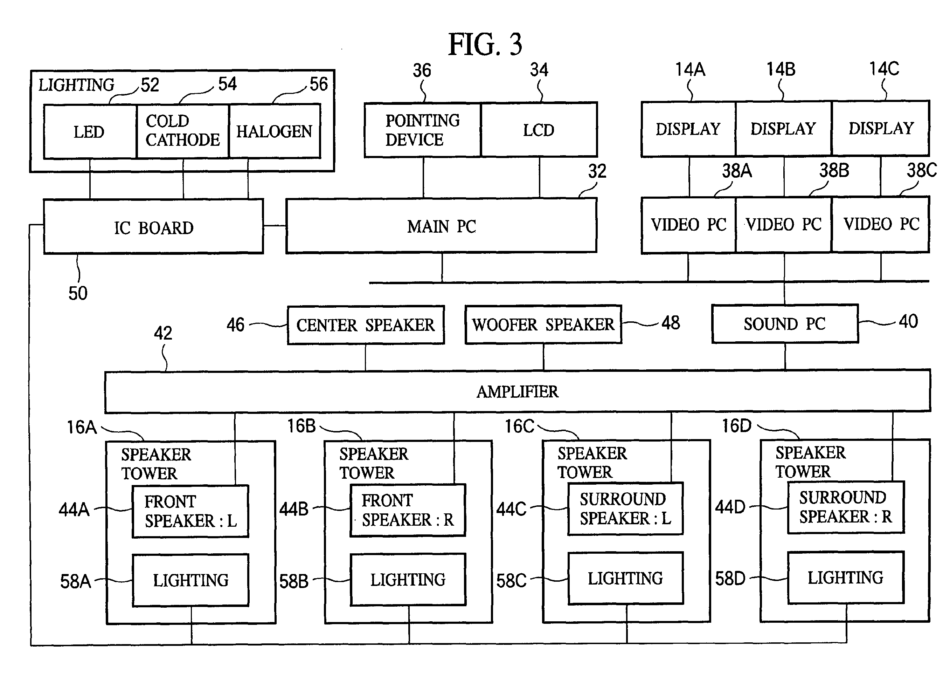

The constitution of the main cabinet (main device) of the present embodiment will be explained with reference to FIG. 3.

The main cabinet 30 includes a main PC 32 which is a control means for generally controlling the main cabinet 30. The main PC 32 is connected to an LCD 34 which is a display means and a pointing device 36 which is an operation means.

The main PC 32 is LAN connected to 3 video PCs 38A, 38B, 38C which are image processing means, and a sound PC 40 which is a sound processing means.

The 3 displays 14A, 14B, 14C forming the integrated display 14, which is a display means, are respectively connected to the video PCs 38A, 38B, 38C. The 3 displays 14A, 14B, 14C display on the integrated display 14 a powerful large image, as of a horse race, etc.

The sound PC 40 is connected to an amplifier 42. The amplifier 42 is connected to speakers 44A, 44B, 44C, 44D provided in the speaker towers 16A, 16B, 16C, 16D, a center speaker 46 and a woofer speaker 48. The speakers 44A, 44B, 44C, 44D, the center speaker 46 and the woofer speaker 48 make more powerful large sounds.

An IO board 50 is connected to the main PC 32. The IO board 50 is connected to various lightings, such as an LED 52, a cold cathode 54, a halogen 56, etc., as effect means, and lightings 58A, 58B, 58C, 58D provided respectively in the speaker towers 16A, 16B, 16C, 16D. The various lightings, such as the LED 52, the cold cathode 54, the halogen 56, etc., the lightings 58A, 58B, 58C, 58D provided in the speaker towers 16A, 16B, 16C, 16D realize impressive illumination.

### (Constitution of Satellite Cabinets (Satellite Devices))

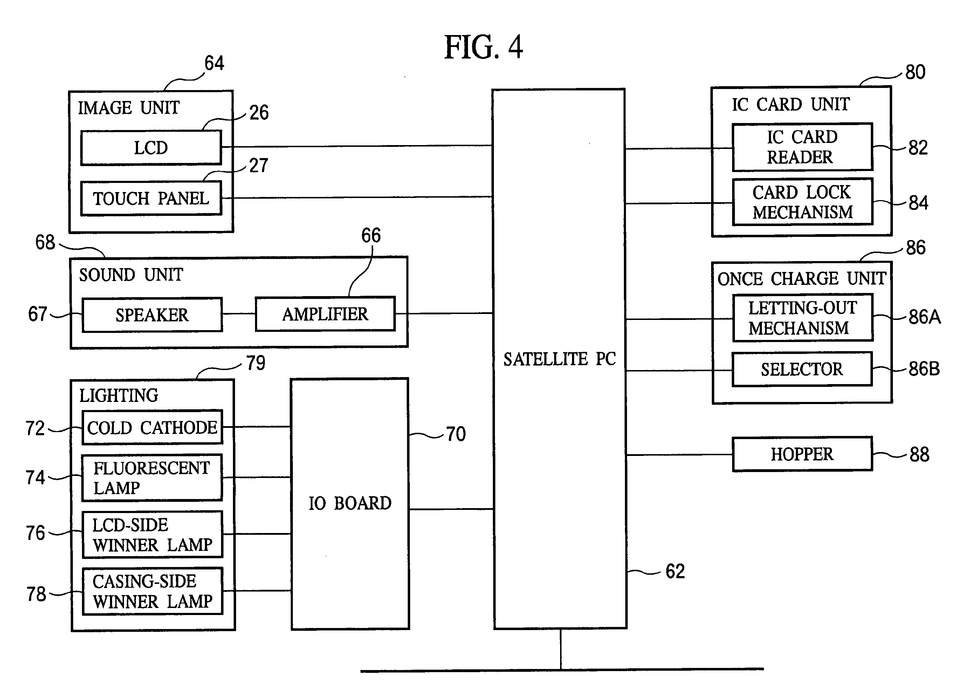

The constitution of the satellite cabinets (satellite devices) of the present embodiment will be explained with reference to FIG. 4.

Each satellite cabinet 60 includes a satellite PC 62 which is a control means for generally controlling the satellite cabinet 60. The satellite PC 62 includes an image unit 64 having the LCD 26 and the touch panel 27 which are operated by a player.

The satellite PC 62 includes a sound unit 68 having an amplifier 66 and a speaker 67.

An IO board 70 is connected to the satellite PC 62. The IO board 70 is connected to various kinds of lightings 79, such as a cold cathode 72, a fluorescent lamp 74, an LCD-side winner lamp 76, a casing-side winner lamp 78, etc., as effect means. The informing means of the LCD-side winner lamp 76 and the casing-side winner lamp 78 inform that the player operating the satellite cabinet 60 wins the horse race game, etc..

The satellite PC 62 includes a IC card unit 80. The IC card unit 80 includes an IC card reader 82 (information reading means and information writing means) for reading and writing information inn/from an IC card which is an information storage medium, and a card lock mechanism 84 which locks the inserted IC card. A player inserts an IC card into the IC card unit 80 to thereby log on the horse race game.

The satellite PC 62 includes a once charging unit 86 for charging medals and a hopper 88 which a discharge mechanism for discharging medals. The once charge unit 86 includes a letting-out mechanism 86A and a selector 86B.

### (Constitutions of Main PC, Video PC, Sound PC, Satellite PC and Various Servers)

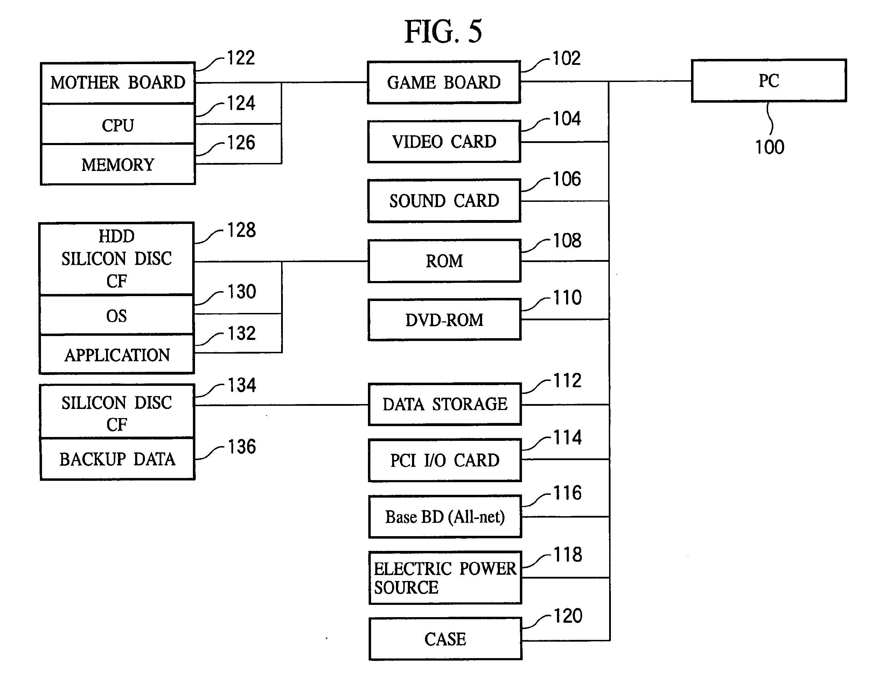

The standard constitutions of the main PC, the video PC, the sound PC, the satellite PC and the various servers (database server, ranking server, web server, mobile phone server, etc) will be explained with reference to FIG. 5.

The PC 100 of the standard constitution includes a game board 102 for the general control, a video card 104 which displays images, a sound card 106 which outputs sounds, a ROM 108, a DVD-ROM 110, a data storage 112, a PCI (Peripheral Component Interconnect) I/O card 114, a base BD (All-net) 116, an electric power source 118 and a case 120.

The game board 102 includes a mother board 122, a CPU 124 and a memory 126.

The ROM 108 which is a storage means comprises an HDD or a silicon disc or a CF 128; an OS (Operation System) 130; and an application 132.

The data storage 112 which is a storage means includes a silicon disc or a CF 134; and a backup data 136.

The main PC, the video PC, the sound PC, the satellite PC and the various servers suitably include necessary ones selected out of this standard constitutions with unnecessary ones omitted.

For example, the sound card 106 is used in the sound PC. The DVD-ROM 110, the data storage 112 (a silicon disc or the CF 134), the backup data 136), the Base BD (All-net) 116 are used in the various servers.

### (Summary of the Game)

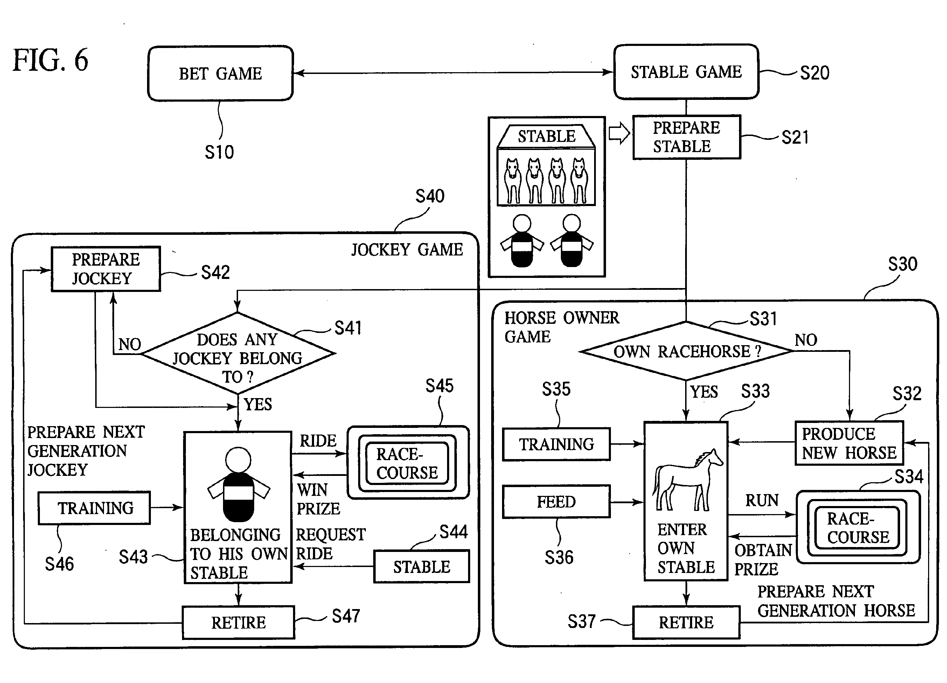

The game of the game system according to the present embodiment will be summarized with reference to the flow chart of FIG. 6.

In the game system according to the present embodiment, the bet game which is a race game wherein places of racehorses in a race are anticipated, and medals are bet on the racehorses to receive distributions, based on a result of the race (Step S10), and the stable game which is a training game wherein a player owns racehorses and jockeys to be participated in races to participate them in a race and wins medals as horse owner prize corresponding to a place (Step S20) are played. The bet game (Step S10) and the stable game (Step S20) can be suitably switched by the operation of the player.

For the details of the bet game (Step S10), refer to the specification of Japanese Patent Application Unexamined Publication No. 2003-93744.

The stable game (Step S20) includes a horse owner game in which a player owns and trains a racehorse to participate them in a race and obtains medals as a horse owner prize corresponding to a place of the racehorse (Step S30), and a jockey game in which the player owns and trains a jockey to participate the jockey in a race to thereby obtain medals as a jockey prize corresponding to a place of the jockey (Step S40).

In the stable game (Step S20), first, a player prepares his own stable (Step S21). The stable is virtually made and is a place where the racehorse is trained and managed. The jockey belongs to the stable. In the game of the present embodiment, the information of 1 stable is prepared in each IC card. The information of 1 stable can cover 4 racehorses and 2 jockeys at maximum.

In the horse owner game (Step S30), first, it is judged whether or not the player owns a racehorse, i.e., the information of the racehorse is registered in the inserted IC card (Step S31). When no racehorse information is registered, the information of a racehorse as a new horse is prepared (Step S32). When the information of a racehorse is prepared as a new horse even with the information of a racehorse already prepared in an IC card, the new horse is produced in Step S32.

The produced new horse enters the stable (Step S33). Accordingly, the information of the stable is related to the information of the racehorse. In the horse owner game, various games can be made with the racehorses which have entered the stable.

Medals are inserted to thereby run the racehorse in the race course (Step S34). The racehorse wins a higher place, whereby the player can obtain medals as a prize.

Medals are inserted to thereby train the racehorses in many ways (Step S35). Medals are inserted to thereby feed the racehorse with various feeds (Step S36).
After the new horse is produced, a period of tame time in which races are held prescribed times passes, and the racehorse retires (Step S37). When the racehorse retires, a new horse of the next generation having the heredity transmitted can be produced (Step S32).

In the jockey game (Step S40), first, it is judged whether or not a belonging jockey is present, i.e., the information of a jockey is registered in the inserted IC card (Step S41). When no jockey information is registered, the information of a new jockey is prepared (Step S42). When the information of a new jockey is prepared even with the jockey information registered in the IC card, the jockey is prepared in Step S32.

The prepared jockey belongs to the player stable (Step S43). Accordingly, the information of the jockey is related to the information of the stable. In the jockey game, various games can be played with the belonging jockeys.

A jockey can be ridden on a race horse which will run in a horserace course at a request of a stable, such as the player's own stable, another player's stable, the computer stable or others (Step S45). When a ride request is made, the insertion of medals may be demanded as a ride request fee. When the racehorse the jockey has ridden wins an upper place, the jockey can obtain medals as a prize.

Medals are inserted to thereby train the jockeys in various ways (Step S46).

When the jockey rides prescribed times after the jockey was prepared, the jockey retires (Step S47). When the jockey retires, a jockey of the next generation having the heredity transmitted can be prepared (Step S32).

### (Constitution of Game Data)

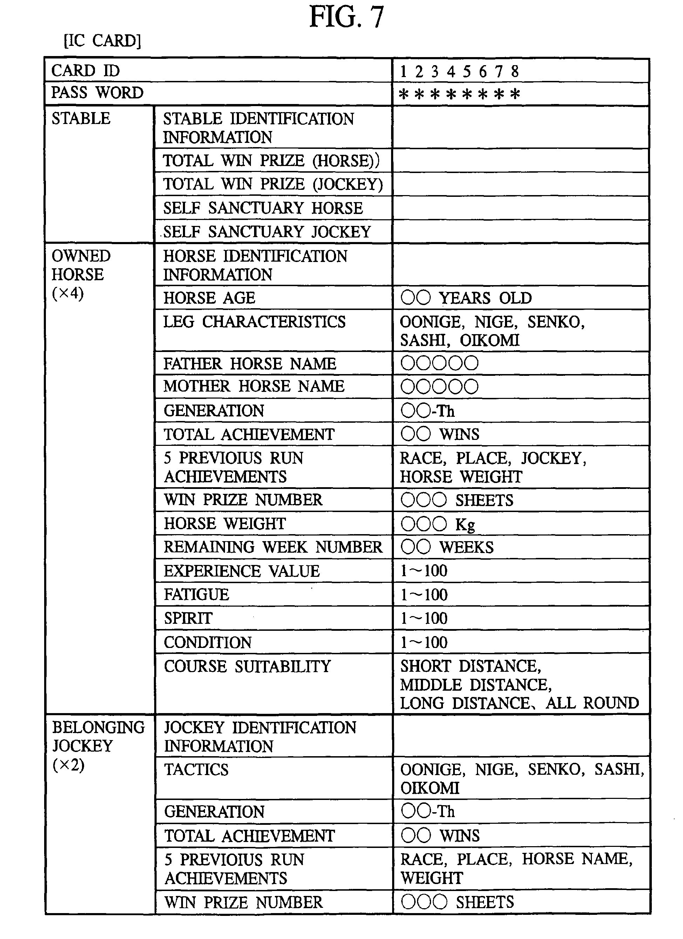

The game data and the databases of the game system according to the present embodiment will be explained with reference to FIGs. 7 to 11.

### (IC Card)

The data structure of the IC card is illustrated in FIG. 7.

In the IC card, as card information, a card ID and a code number are recorded as card information; and as stable information, the identification information of a stable, a total obtained prize of a racehorse belonging to the stable, a total obtained prize of a jockey belonging to the stable, etc. are recorded. One ID card can record information of a plurality of racehorses and the information of a plurality of jockeys.

As the racehorse information, the identification information of a horse; ability information used in races, such as the horse age, leg characteristics (*oonige* (lead long distance and goal), nige (lead and goal), *senko* (run immediately after leading horse and pass to goal), *sashi* (run middle in a group and pass to goal), *oikomi* (run after a group and pass to goal), etc.; the father horse name, the mother horse name, the generation number, the total achievement, the previous race achievements (race names, places, jockey names, horse weights, etc.), the obtained prize number, the horse weight, the remaining week number, etc. are recorded. The racehorse information also includes parameters used in the race processing, such as the experience value, the fatigue degree, the spirits value, the condition value, the course stability, etc.

The jockey information includes the identification information of a jockey; the ability information of the jockey, such as the tactics (*oonige* (lead long distance and goal), nige (lead and goal), *senko* (run immediately after leading horse and pass to goal), sashi (run middle in a group and pass to goal), *oikomi* (run after a group and pass to goal), etc. used in horse races; the information of the generation number, the total achievement, the previous race achievement (race names, places, horse names, pound amount, etc.), the obtained prize number, etc. used in the race processing.

### (Game Data of Main Cabinet)

The various game data of the main cabinet 30 will be explained.

The various game data necessary to execute the game are stored in the memory 126 which is the storage means of the game board 102 of the main PC 32 of the main cabinet 30. For example, the horse database which is a collection of data of racehorses, the jockey database which is a collection of data of jockeys, a race run table which is a collection of data of racehorses, jockeys, etc. to run in a race, and a satellite correspondence table which is a collection of the satellites and players.

### (Horse Database)

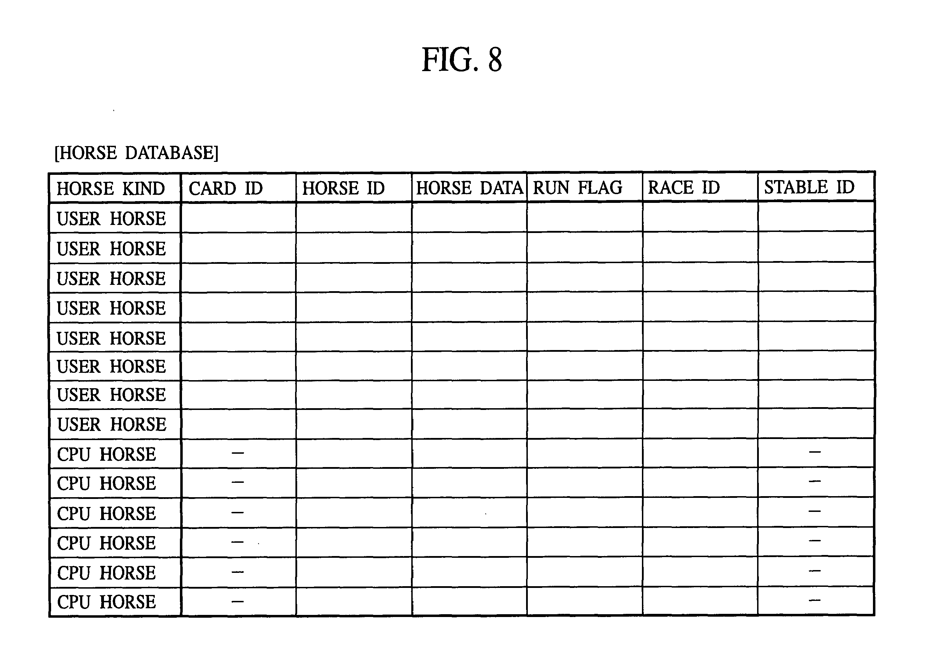

The data structure of the horse database is illustrated in FIG. 8.

In the horse database, the information of horses (hereinafter called "user horse") users (players) using the game system own and the information of horses (hereinafter called "CPU horse" stored in the memory means by the game system are collected. To realize amusing races, a number of CPU horses are always prepared.

In the user horses, the card IDs of the users owning the horses, the horse IDs identifying the respective horses, the horse data, which is the racehorse information described above, run flags which indicate whether or not the horses will run in a race, the race ID of a race horses run, the stable IDs the horses belong to, etc. are collected.

In the CPU horses as well, the same information as in the user horses are collected, but part of the information, such as the card IDs of users, etc., is not recorded.

### (Jockey Database)

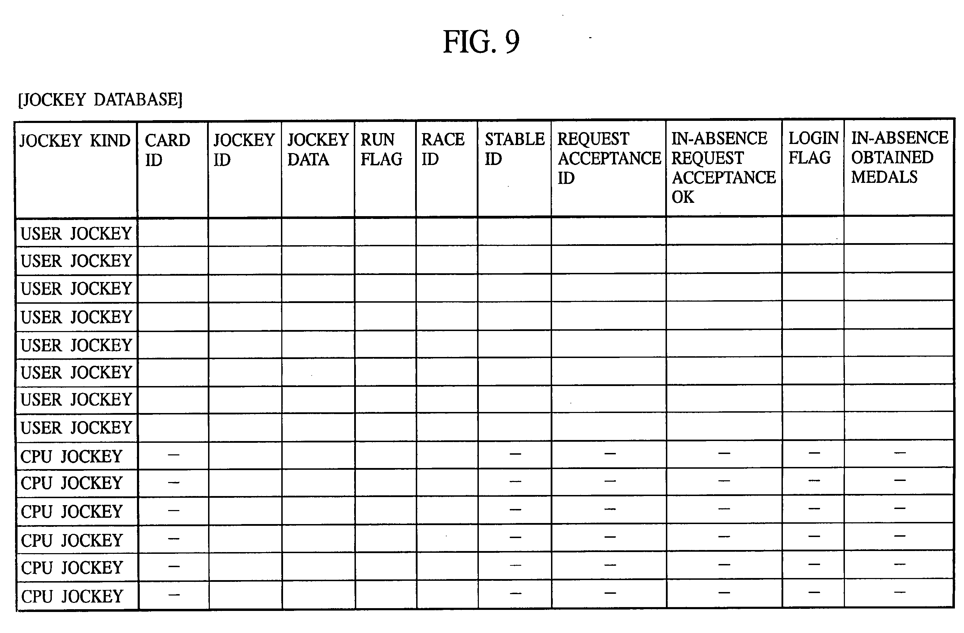

The data structure of the jockey database is illustrated in FIG. 9.

In the jockey database, the information of jockeys (hereinafter called "user jockey") users (players) using the game system own and the information of jockeys (hereinafter called "CPU jockey") stored in the memory means the game system stored in advance are collected. To realize amusing races, a number of CPU jockeys are always prepared.

In the user jockeys, the card IDs of users who own the jockeys, the jockey IDs identifying the respective jockeys, the jockey data which is the jockey information described above, run flags which indicate whether or not the jockeys will ride in a race, the race ID of a race for the jockeys ride in, the stable IDs of stables the jockeys belong to, OK flags indicating whether or not to accept ride requests of other users, in-absence request acceptance OK flags indicating whether or not to accept ride requests of other users made even in the absence of a user, login flags indicating whether or not the users owing the jockeys are presently participating, an in-absence obtained medal numbers, etc. are collected.

Also in the CPU jockeys, the same information as the user jockeys is collected, but the card IDs, the stable IDs, the request OK flags, the in-absence request acceptance OK flags, the login flags, the in-absence obtained medal numbers, etc., are not recorded.

### (Race Run Table)

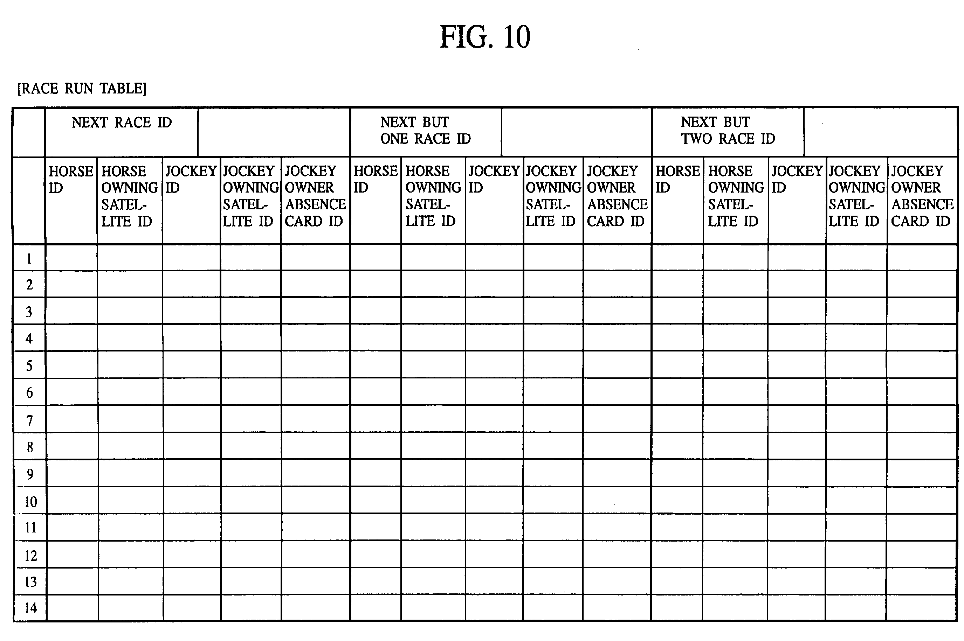

The data structure of the race run table is illustrated in FIG. 10.

In the race run table, horses to run races and jockeys to ride the horses respectively in the next race, a next but one race and the next but two races are collected. The horses to run the races include the horses of the users and the CPU horses. The jockeys to ride the horses include the jockeys of the user and CPU jockeys.

For each race run horse, the horse ID of the run horse, the horse owner satellite ID which indicates a satellite used by the user owning the horse, the jockey ID riding the horse, the jockey owner satellite ID which indicates a satellite used by the user owning the jockey, the absent jockey owner card ID which indicates the user owning the jockey when the user is absent.

When a horse to run a race is a CPU horse, the column of the horse owning satellite ID is blank. When the jockey riding the horse is a CPU jockey, the columns of the jockey owning satellite ID and the absent jockey owning card ID are blank.

The race run table has columns for, e.g., 14 horses. Fourteen horses at maximum can run. A number of horses which are permitted to run may be decided depending on a kind of race.

For each race, it is decided in advance that the game system runs, e.g., 8 horses (CPU horses) and the jockeys (CPU jockeys) for the 8 horses. When users (players) register run horses and jockeys to ride the horses, the horses and the jockeys are sequentially added to the race run table. When the registrations by the users are increased and exceed a maximum run horse number, the CPU horses are correspondingly decreased. For each race, the registrations by the users are set at, e.g., 10 horses at maximum. Even in a race where 14 horses at maximum run, combinations of at least 4 CPU horses and CPU jockeys can be made.

The jockeys to be combined with the CPU horses can be not only CPU jockeys but also user jockeys.

### (Satellite Correspondence Table)

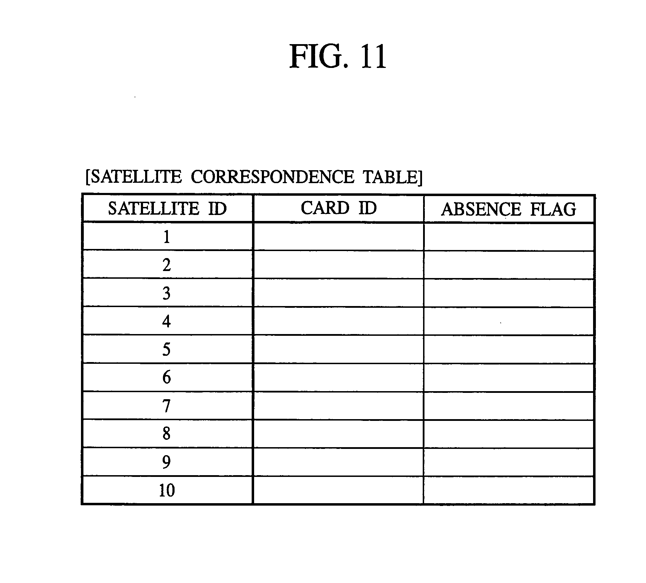

The data structure of the satellite correspondence table is illustrated in FIG. 11.

The satellite correspondence table stores real-time information of users using the respective satellites. For each of 10 satellites, the satellite ID, the card ID of the user who is presently using the satellite, and the card insertion detection flag (user absence flag) which indicates whether or not the card is presently inserted are stored.

Thus, whether or not users are using the satellites are present, and the card IDs being used can be known in real-time.

### (Game Data of Satellite Cabinet)

Various game data of the satellite cabinets 60 will be explained.

In the memory 126 of the game board 102 of the satellite PC 62 of the database server 92, various game data necessary to execute the game are stored. For example, the data of racehorses, the data of jockeys, etc. associated with each satellite are stored.

### (Game Data of Database Server)

Various game data of the database server 92 will be explained.

In the HDD, the silicon disc or the CF 128 of the PC 100 of the database server 92, the data stored in the race game machines 10 installed nationwide are collected and stored. For example, store IDs, the game machine IDs of the race game machines installed in the stores, various game data stored in the main cabinets 30 of the race game machines 10, the card IDs and all the card data of used IC cards, etc. are collected and stored.

### (Details of the Game Processing)

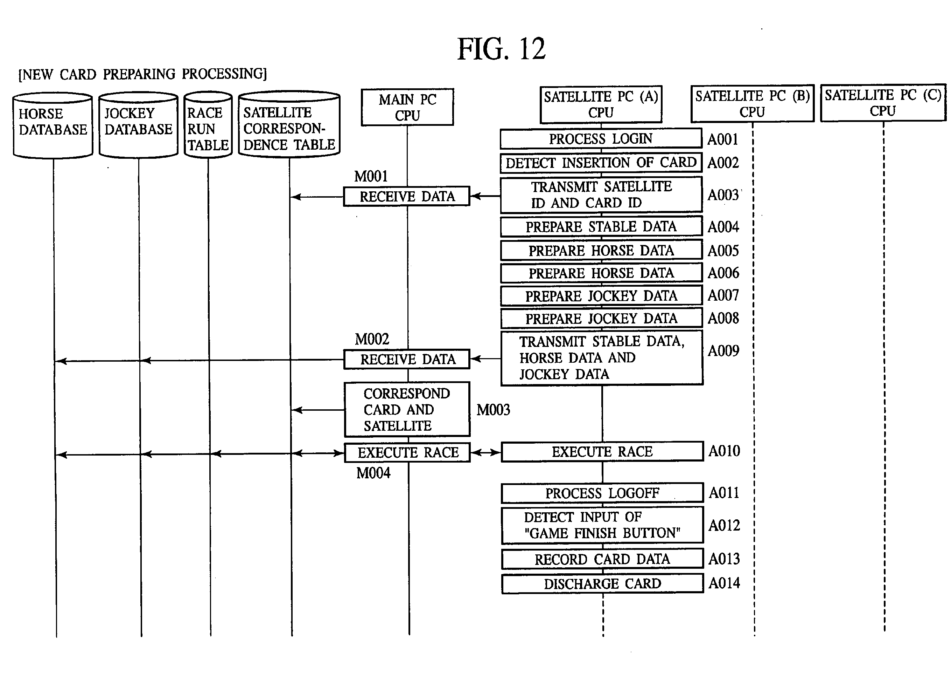

Various game processing of the game system according to the present embodiment will be detailed with reference to FIGs. 12 to 25.

In the flow charts of FIGs. 12 to 16, the processing flow of the main PC 32 is illustrated at the center; the processing flows of the satellite PCs 62 of 3 satellite cabinets 60 are illustrated on the right side; and on the left side, the horse database, the jockey database, the race run table and the satellite correspondence table stored in the memory 126 of the game board 102 of the main PC 32 are illustrated, and the relationships of the receipt and transmission, etc. of signals and data between them are indicated by the arrows.

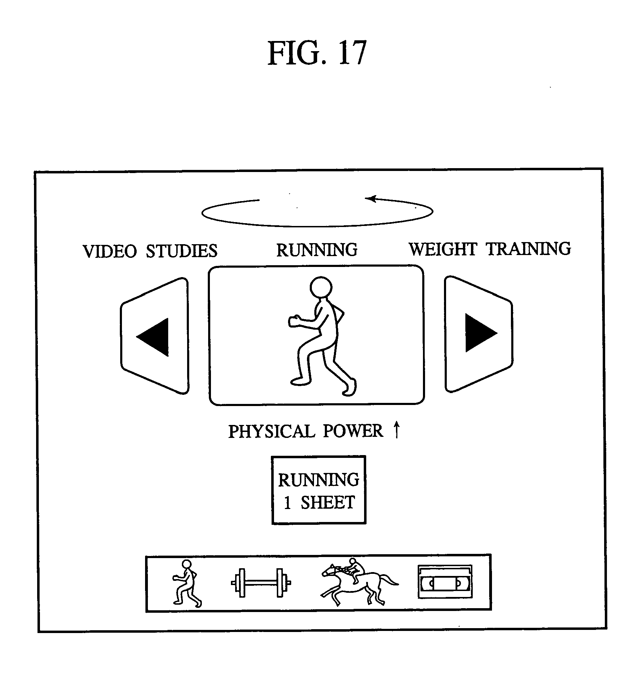

FIGs. 17 to 25 are examples of images of the steps of the flow charts of FIGs. 12 to 16. The steps having image examples are indicated to this effect.

In the description of this game processing, for easy understanding, the operation between the main cabinet 30 and 3 satellite cabinets 60, of 1 race game machine is explained, but even when more satellite cabinets 60 are used, the same operation is made. Furthermore, when the game system includes a plurality of the race game machines interconnected via LAN and the internet, the basic operation is the same.

### (New Card Preparing Processing)

The new card preparing processing for a player preparing a new card will be explained with reference to the flow chart of FIG. 12.

When a player logs in the satellite cabinet (A) 60 with an IC card he bought anew, the satellite PC (A) 62 of the satellite cabinet (A) 60 starts the login processing (Step A001).

First, the CPU 124, which is the control means of the satellite PC(A)62, detects based on a detection signal from the card detecting means whether or not an IC card has been inserted (Step A002). When the insertion of the IC card is detected, the CPU 124 of the satellite PC (A) 62 transmits the card ID read from the IC card and the satellite ID to the main PC 32 (Step A003).

The CPU 124, which is the control means of the main PC 32, receives the satellite ID and the card ID transmitted from the CPU 124 of the satellite PC (A) 62 (Step M001) and stores in the satellite correspondence table, the satellite ID and the card ID associated with each other and turns off the absence flag.

Then, the CPU 124 of the satellite PC (A) 62 detects the various operational inputs by the player and produces the stable data of the stable ID, the stable name, etc

### (Step A004).

Then, the CPU 124 of the satellite PC (A) 62 detects the various operational inputs by the player and produces the horse data of the horse ID of a new horse, the horse name, etc (Step A005). Subsequently, the CPU 124 of the satellite PC (A) 62 detects the various operational inputs by the player and produces the horse data of the ability parameters, etc. by, e.g., training the new horse (Step A006). Four horses at maximum can be produced.

Then, the CPU 124 of the satellite PC (A) 62 detects the various operational inputs by the player and produces the jockey data of the jockey ID of a new jockey, the jockey name, etc. (Step A007). Subsequently, the CPU 124 of the satellite PC (A) 62 detects the various operational inputs by the player and trains the jockey data of the ability parameters, etc. by, e.g., training the new jockey (Step A008).

FIG. 17 is one example of the images of training the jockey in Step A008. In the jockey training of FIG. 17, "running", "weight training", "training ride", "video studies" are prepared. The player inserts a number of medals necessary for the training, selects one of the trainings and commands a strength to make the training. The training improves the parameters of the jockey, which is reflected on the race result.

A training image showing a state of the training is displayed upper middle of the training image. When the CPU 124 of the satellite PC (A) 62 detects a touch of the player to a part of the touch panel 27 corresponding to the left-directed arrow or the right-directed arrow, the CPU 124 of the satellite PC (A) 62 changes a kind of the training.

When the CPU 124 of the satellite PC (A) 62 detects a touch of the player to a button displayed below the training image, the CPU 124 of the satellite PC (A) 62 changes the strength and amount of the training.

Short-cut bars for directly commanding a training kind are displayed below the training image. When the CPU 124 of the satellite PC (A) 62 detects a touch of the player to one of the short-cut bars, the CPU 124 of the satellite PC (A)62 executes the corresponding kind of the training.

The flow chart of FIG. 12 follows, and the stable data is produced (Step A004), the horse data is produced (Step A005), the horse data is trained (Step A006), the hockey data is produced (Step A007), and the jockey data is trained (Step A008). Then, the CPU 124 of the satellite PC (A) 62 transmits these data to the main PC 32 (Step A009).

The CPU 124 of the main PC 32 receives the data transmitted from the CPU 124 of the satellite PC (A) 62 before the race processing is started (Step M002) and records these data in the horse database and the jockey database. In the horse database, the card IDs, the horse IDs, the horse data, the jockey data and the stable IDs of the produced horses are recorded. In the jockey database, the card IDs, the jockey IDs, the jockey data and the stable IDs of the produced jockeys are recorded.

The CPU 124 of the main PC 32 associates the satellite IDs with the card IDs (Step M003). Here, a card ID being detected is recorded in the satellite ID of the satellite PC (A) 62, and the absence flag is turned off. The absence flags of the satellite IDs of the satellite PC (B) 62 and the satellite PC (C) 62 are turned on.

Next, then, the CPU 124 of the main PC 32 and the CPU 124 of the satellite PC (A) 62 execute the race processing (Step M004, A010). The details of the race processing are not explained here.

When the player finishes the game and logs off, the satellite PC (A) 62 of the satellite cabinet (A) 60 starts the logoff processing (Step A011).

The CPU 124 of the satellite PC (A) 62 detects the input of the "game finish button" by the player (Step A012) and records in the IC card the most recent stable data, horse data and jockey data received from the main control unit (Step A013). When the recording in the IC card finishes, the CPU 24 of the satellite PC (A) 62 discharges the IC card (Step A04). Thus, the logoff processing is completed.

### (Ride Request Acceptance Setting Processing)

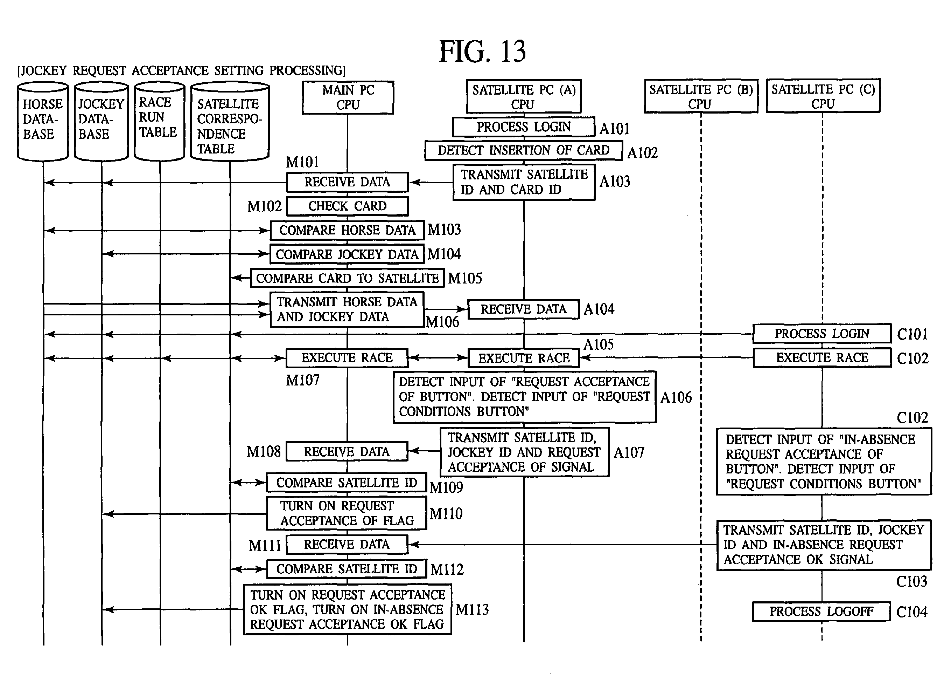

The setting processing for setting whether or not a player accepts a ride request from another player for a jockey the player owns will be explained with reference to the flow chart of FIG. 13. Here in the explanation of the setting processing, respective players have finished the processing for preparing new cards and again log in with the prepared IC cards.

Here, the player using the satellite PC (A) 62 makes the setting of receiving a ride request from another player but only when the player logs in. The player using the satellite PC (C) 62 makes the setting of receiving a ride request from another player even when the player is absent, i.e., does not log in.

When the player logs in the satellite cabinet (A) 60 with the IC card he already owns, the satellite PC (A) 62 of the satellite cabinet (A) 60 starts the login processing (Step A101).

First, the CPU 124 of the satellite PC (A) 62 judges whether or not the IC card has been inserted (Step A102). When the insertion of the IC card is detected, the CPU 124 of the satellite PC (A) 62 transmits the stored contents, such as the card ID, etc., read from the IC card, and the his own satellite ID to the main PC 32 (Step A103).

The CPU 124 of the main PC 32 receives the satellite ID, and the contents, such as the card ID, etc., transmitted from the CPU 124 of the satellite PC (A) 62 (Step M101) and stores the satellite ID and the card ID corresponding to each other in the satellite correspondence table and turns off the absence flag.

Then, the CPU 124 of the main PC 32 checks the properness of the inserted IC card (Step M102).

First, the CPU 124 of the main PC 32 compares the horse data stored in the IC card transmitted from the CPU 124 of the satellite PC (A) 62 to the contents of the horse database (Step M103). Similarly, the CPU 124 of the main PC 32 compares the jockey data stored in the IC card transmitted from the CPU 124 of the satellite PC (A) 62 to the contents of the jockey database (Step M104). Based on such comparison, it is judged whether or not the inserted IC card is proper.

When the inserted IC card is judged proper, the CPU 124 of the main PC 32 corresponds the satellite ID to the card ID (Step M003). The detected card ID is recorded in the satellite ID of the satellite PC (A) 62, and the absent flag is turned off.

Then, the CPU 124 of the main PC 32 reads from the horse database and the jockey database the horse data and the jockey data belonging to the card ID of the inserted IC card and transmits them to the satellite PC (A) 62 (Step M106), and the CPU 124 of the satellite PC (A) 62 receives the transmitted data (Step A104).

On the other hand, when another player logs in the satellite cabinet (C) 60 with an IC card he already has, the satellite PC (C) 62 of the satellite cabinet (C) 60 starts the login processing (Step C101). The details of the login processing which is the same as that of the satellite cabinet (A) 60 will not be explained here.

Then, the race is executed by the satellite cabinet (A) 60 with the player logging in and the satellite cabinet (C) 60. The CPU 124 of the main PC 32, the CPU 124 of the satellite PC (A) 62 and the CPU 124 of the satellite PC (C) 62 execute the race, referring to the horse database, the jockey database, the race run table, and the satellite correspondence table (Steps M107, A105 and C102). The details of the race processing will not be explained.

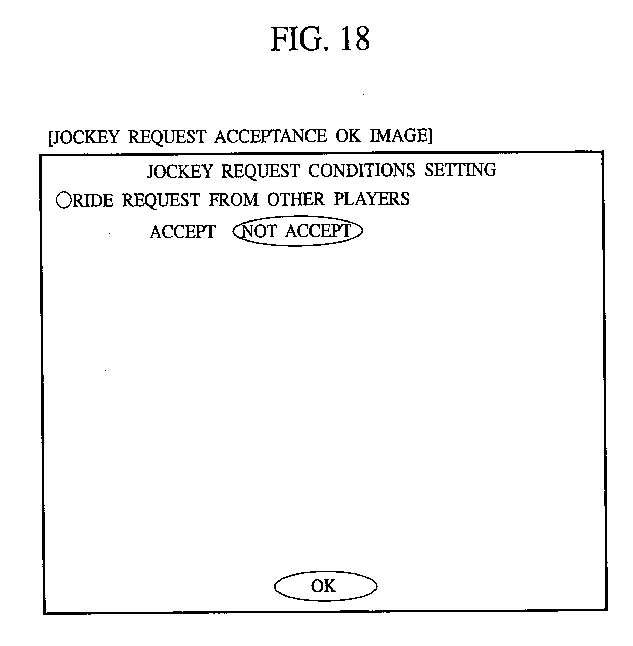

Then, the jockey ride request acceptance setting processing in the satellite cabinet (A) 60 will be explained. When the CPU 124 of the satellite PC (A) 62 detects an operational input of a player, the CPU 124 of the satellite PC (A) 60 displays a jockey ride request acceptance image illustrated in FIG. 18. In the jockey ride request acceptance image, "accept" and "not accept" are displayed below the column "ride requests from other players".

When the CPU 124 of the satellite PC (A) 62 detects the touch of the player to the letter region "not accept", the CPU 124 of the satellite PC (A) 62 keeps displaying the ride request acceptance image of FIG. 18. When the CPU 124 of the satellite PC (A) 62 detects the touch of the player to the letter region "OK", the CPU 124 of the satellite PC (A) 62 turns off the request acceptance OK flag of the jockey of the jockey database.

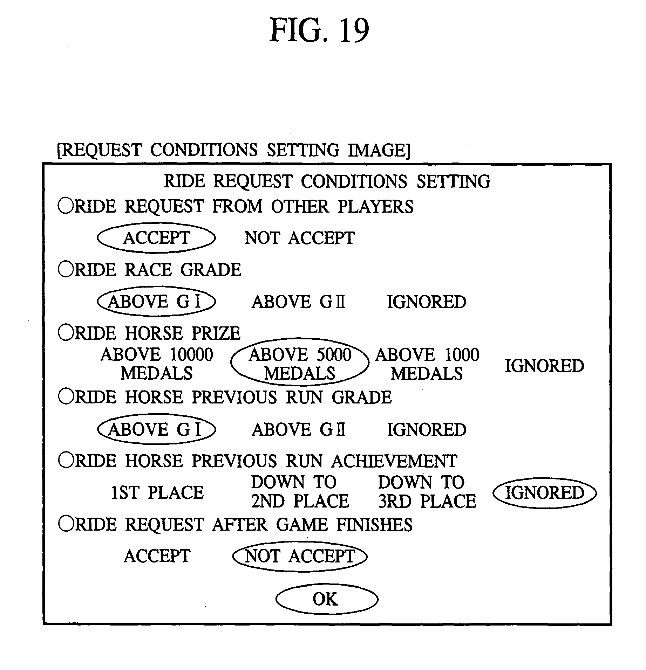

When the CPU 124 of the satellite PC (A) 62 detects the touch of the player to the letter region "accept", the jockey ride request acceptance image of FIG. 19 and displays the various conditions for the request acceptance. For accepting the ride request, the conditions of the grade (above GI, above GII, none), the ride horse win prize (above 10,000 medals, above 5,000 medals, above 1,000 medals, none), the grade of the previous race of the ride horse (above GI, above GII, none), the place in the previous race of the ride horse (1st place, up to 2nd place, up to 3rd place, none), and whether or not to accept a ride request after the game finishes can be set.

The game system side may limit maximum run times of the run of 1 jockey at the ride request. The players may set the conditions of maximum times (once, twice, 3 times, 4 times, 5 times) of a player receiving a ride request.

Setting the conditions for the ride request high makes the possibility of obtaining win prizes high when a jockey rides but makes the opportunity of riding as a jockey low and makes it more possible that, when lost, the ability data as a jockey become low. In view of these possibilities, the players set the conditions.

When the CPU 124 of the satellite PC (A) 62 detects a touch of the player to the letter region "accept" and detects his touches to the letter regions of "above GI", "above 5,000", "above GI", "none" and "not accept" of the respective set conditions (Step A106), the CPU 124 of the satellite PC (A) 62 transmits the satellite ID, the jockey ID, the request acceptance OK signal and the request acceptance conditions signals to the main PC 32 (Step A107).

When the CPU 124 of the main PC 32 receives the signals from the satellite PC (A) 62 (Step M108)), the CPU 124 of the main PC compares the satellite ID to the satellite correspondence table (Step M109), turns on the request acceptance OK flag of the jockey of the jockey database and turns off the in-absence request acceptance OK flag, and records the respective detected set request acceptance conditions (Step M110).

The jockey ride request acceptance setting processing of the satellite cabinet (C) 60 with the player logging in will be explained.

The CPU 124 of the satellite PC (C) 62 detects an operational input of a player, first the jockey request acceptance image of FIG. 18 is displayed on the image unit (C)64 of the satellite cabinet (C) 60. In the jockey request acceptance image, "accept" and "not accept" are displayed below the column of "jockey requests from other players".

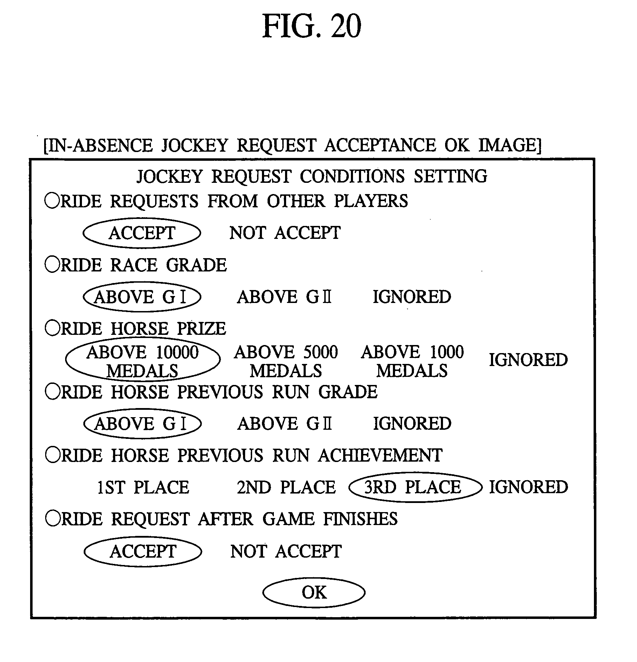

When the CPU 124 of the satellite PC (C)52 detects a touch of the player to the letter region of "accept", the image of FIG. 20 is displayed to display the various conditions for accepting the request. As in the jockey request acceptance of the satellite cabinet (A) 60, the conditions of the grade for a race for which the jockey request is made, the conditions for the ride horse win prizes, the conditions of the grade for the previous race of the ride horse, the conditions of the achievement of the previous race of the ride horse, and the conditions for setting whether or not a ride request is accepted after the game finishes can be set.

The game system side may limit maximum run times of the run of 1 jockey at the ride request. The players may set the conditions of maximum times (once, twice, 3 times, 4 times, 5 times) of a player accepting a ride request.

When the CPU 124 of the satellite PC (C) 62 detects a touch of the player to the letter regions "accept" and detects touches of the player to "above GI", "above 10,000 medals", "above GI", "above three times" and "accept" of the respective set conditions of the jockey request acceptance image (Step C102), the CPU 124 of the satellite PC (C) 62 transmits the satellite ID, the jockey ID, the in-absence request acceptance OK signal and the request acceptance condition signal (Step A107).

When the CPU 124 of the main PC 32 receives the signals from the satellite PC (C) 62 (Step M111), the CPU 124 of the main PC 32 compares the satellite ID to the satellite correspondence table (Step M112), turns on the request acceptance OK flag and the in-absence acceptance OK flag of the jockey of the jockey database, and records the respective recorded set request acceptance conditions (Step M113).

Then, when the player of the satellite cabinet (C) 60 makes the operation for the logoff, the CPU 124 of the satellite PC (C)62 detects the logoff operation by the player and makes the logoff processing (Step C104). The most recent stable data, horse data and jockey data are recorded in the IC card, the IC card is discharged, and then the logoff processing is finished.

The jockey request acceptance images may be different from those illustrated in FIGs. 18 and 20. For example, the image for selecting "accept" or "not accept" for a jockey ride request is not provided, but in place, it is possible that a "ride request condition button" is provided, and when a touch of a player to the "ride request condition button" is detected, a ride request condition setting image for setting the above-described various conditions for accepting a ride request acceptance is displayed.

### (Race Run Registration Processing: Combinations of 1 User Horse and Other User Horses)

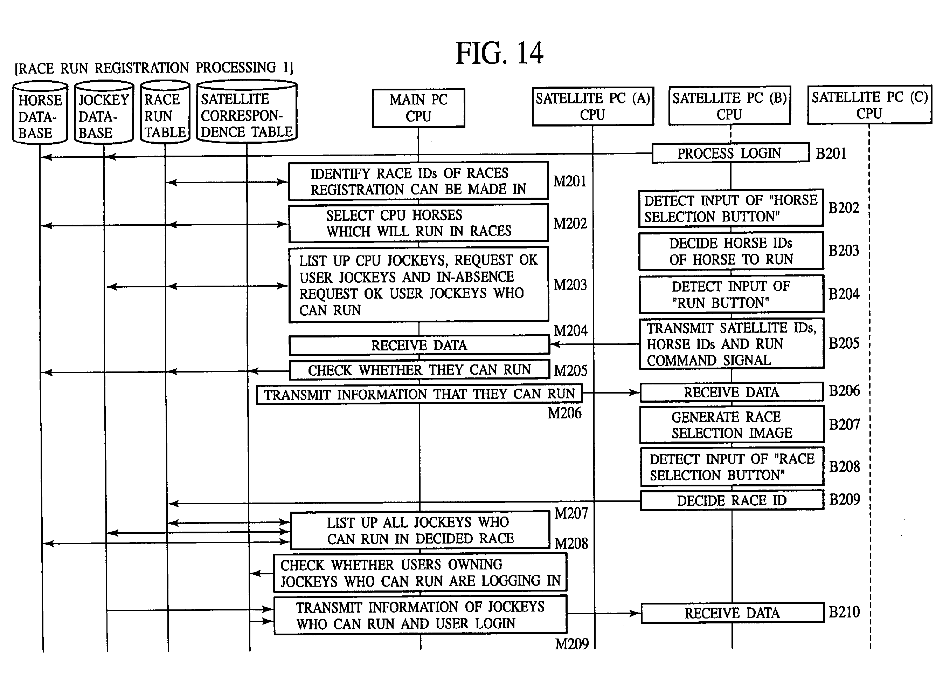

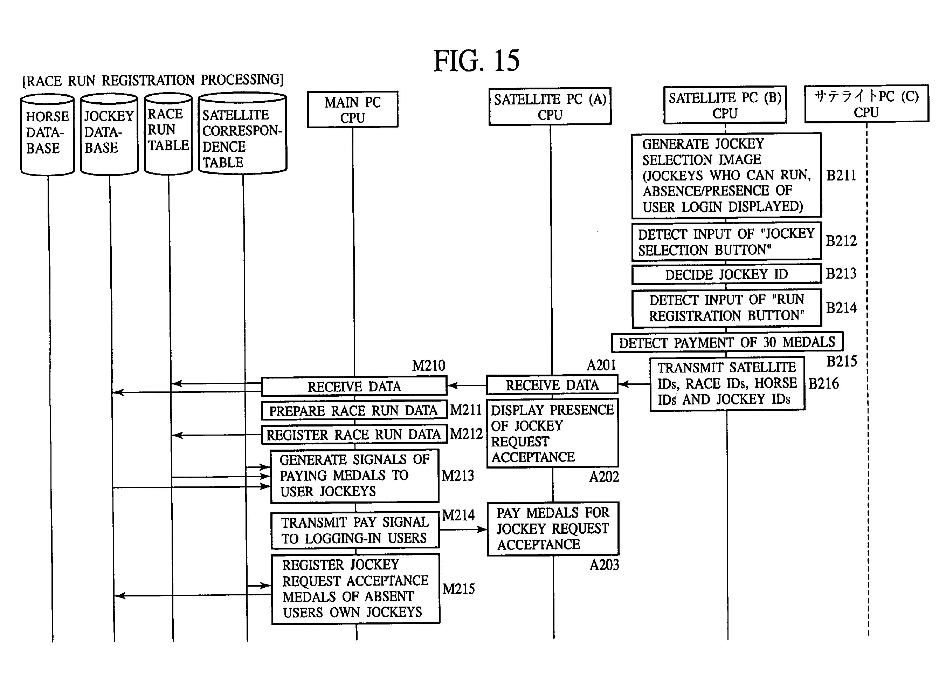

The race run registration processing in which when a player registers his own horse for a run, the player request jockeys owned by other players to ride the horse will be explained with reference to the flow chars of FIGs. 14 and 15.

Here, the player using the satellite cabinet (B) 60 requests a jockey owned by the player presently logging in the satellite cabinet (A) 60 to ride and a jockey owned by the player who has before logged in the satellite cabinet (C) 60 and set the in-absence ride request OK to ride.

As illustrated in FIG. 14, when the player logs in the satellite cabinet (B) 60 with the IC card, the satellite PC (B) 62 of the satellite cabinet (B) 60 starts the login processing (Step B201). The details of the login processing will not be explained.

The CPU 124 of the main PC 32 makes the processing for the race run registration. First, the CPU 124 of the main PC 32 records in the race run table the race IDs for 3 races for which the run registration can be made (Step M201).

Next, the CPU 124 of the main PC 32 selects and registers CPU horses to run in the respective races, turns on the run flags of the CPU horses of the horse database and records the race IDs (Step M202).

Then, for each of the races, a CPU jockey who can run, a user jockey of the player presently logging in, for whom a ride request is OK and a user jockey whose owner does not presently login but for whom a ride request is OK are listed up (Step M203). The user jockeys are listed up based on the ride conditions set by the player.

On the other hand, the player logging in the satellite cabinet (B) 60 displays a horse selection image (not illustrated) and touches the "horse selection button". The CPU detects the operational input of the "horse selection button" by the player (Step B202) and decides the horse ID of the horse to run (Step B204).

When the CPU 124 of the satellite PC (B) 62 detects the operational input of the run button by the payer (Step B204), the CPU 124 of the satellite PC (B) 62 transmits the satellite ID, the horse ID and the run request signal to the main PC 32 (Step B205).

The CPU 124 of the main PC 32 receives the run request signal from the satellite PC (B)62 (Step 204) and checks whether or not the run registration is possible with reference to the contents of the horse database, the race run table and the satellite correspondence table (Step M205).

Then when the CPU 124 of the main PC 32 judges that the run registration is possible, the CPU 124 of the main PC 32 transmits the information to the effect that the run registration is possible to the satellite cabinet (B) 69 (Step M206).

The CPU 124 of the satellite PC (B) 62 receives the run OK information from the main PC 32 (Step B206) and produces a race selection image (Step B207).

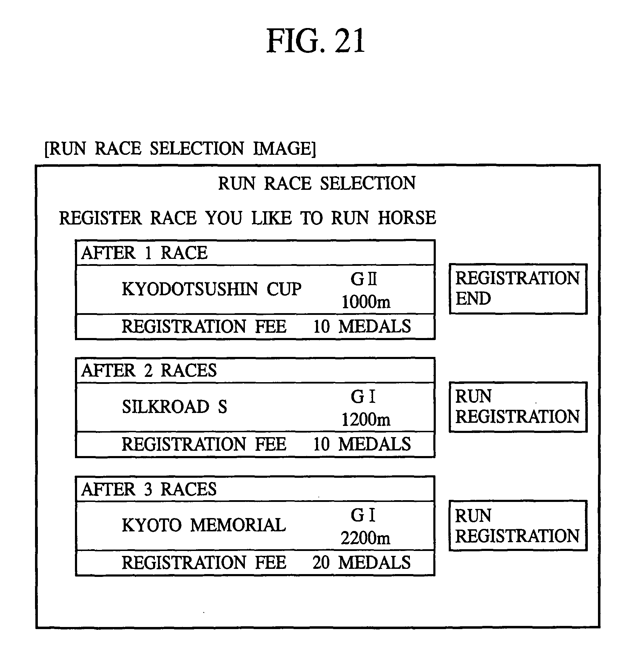

FIG. 21 illustrates one example of the run race selection image. In the run race selection image, for the next race (after 1 race), the next but one race (after 2 races) and the next but 2 race (after 3 races), race names (Kyodo-tsushin-sha Cup, Silkroad S, Kyoto memorial, etc.), race grades (GI, GII, etc.), race distances (1,000 m, 1,200 m, 2200 m, etc.) and medal numbers necessary for the registrations (10 medals, 20 medals, etc.) are displayed. Race selection buttons are displayed on the right side of the contents display of the respective races. For the race (after 1 race) for which the run registration has been finished, "registration finished" is displayed, for the races (after 2 races, after 3 races) for which the run registration can be made, "run registration" is displayed.

The CPU 124 of the satellite PC (B) 62 detects whether or not the player has touched the race selection button (Step B208) and decides the race ID of the run race (Step B209).

When the race ID is decided, the CPU 124 of the main PC 32 registers the run horse ID in the column of the run horse corresponding to the horse ID of the race run table. When 14 horses have been registered in the race run table for the race, one of the CPU horses is deleted and, in place of the deleted CPU horse, the user horse is registered.

Next, the CPU 124 of the main PC 32 lists up all jockeys who can ride the horses whose runs have been decided (Step B207). CPU jockeys and user jockeys for whom ride requests are OK are listed up. The user jockeys are listed up in consideration of the ride conditions set for each race by the players.

Then, the CPU 124 of the main PC 32 checks with reference to the satellite correspondence table whether or not the players owning the run OK jockeys have been logging in (Step M208).

Next, the CPU 124 of the main PC 32 transmits with reference to the jockey database and the satellite correspondence table the information of the run OK jockeys and the user login information to the satellite cabinet (B) 60 (Step M209).

The CPU 124 of the satellite PC (B) 62 receives the information of the run OK jockeys and the user login information (Step B210) and produces the jockey selection image, based on the received data. In the jockey selection image, the run OK jockeys, the user login information, etc., for example, are displayed.

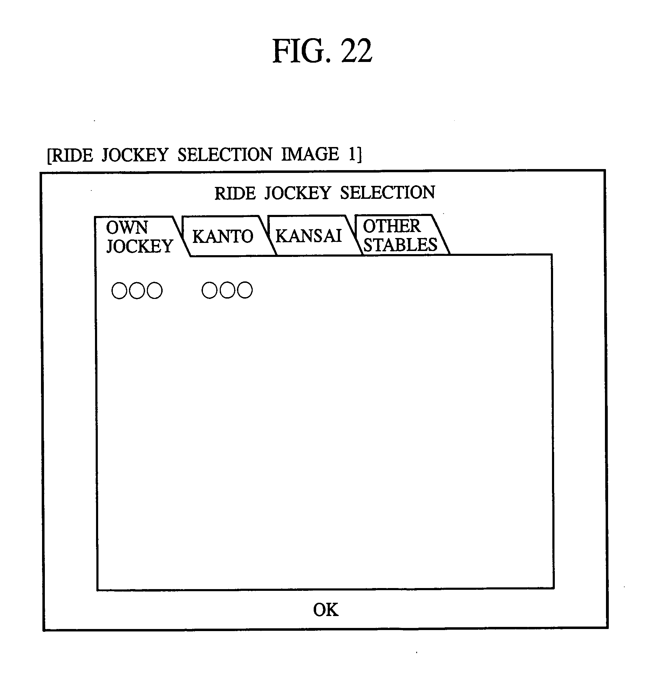

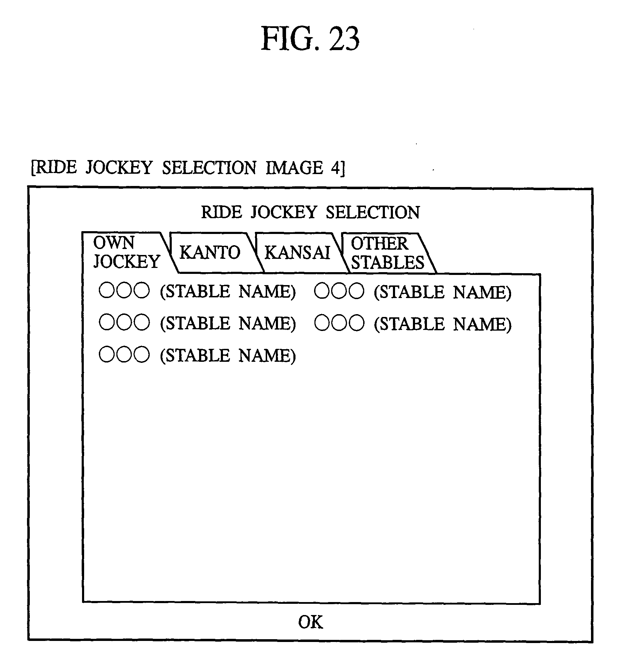

FIGs. 22 and 23 illustrate examples of the jockey selection image. In the jockey selection images, an "Exclusive" tab for selecting an own jockey, a "Kanto" tab for selecting CPU jockeys coming from Kanto, a "Kansai" tab for selecting a jockey coming from Kansai, and an "other stables" tab for selecting jockeys of other users are provided.

FIG. 22 is an image of the "Exclusive" tab. In the image, jockeys owned by a player owning a run horse are displayed. In the present embodiment, 2 user jockeys at maximum are displayed.

FIG. 23 is an image of the "other stables" tab. In the image, user jockeys, who belong to other stables, for whom ride requests from other users are set OK, and who can run in this race, are displayed.

The CPU 124 of the satellite PC (B) 62 detects the operational input by the player with the jockey selection button (Step B212). Thus, the ride jockey ID is decided (Step B213) .

When the CPU 124 of the satellite PC (B) 62 detects the operational input by the player to the "run registration button" (Step B214), a medal number necessary to register the run is displayed to ask the player to pay the medals. The CPU 124 of the satellite PC (B) 62 detects the payment of the medals by the payer, based on a detection signal from the medal insertion detecting means (Step B214), and the run registration is thus completed.

Here, the player of the satellite cabinet (B) 60 runs 2 horses he owns. For one of the horses, a jockey owned by the player logging in the satellite cabinet (A) 60 (for whom the ride requests from other users are set OK) is selected, and for the other horse, a jockey owned by a player who has logged in the satellite cabinet (C) 60 (for whom the ride requests from other uses even in absence are set OK) are selected.

When the CPU 124 of the satellite PC (B) 62 detects the medal payment by the player for registering the run Step B215), the CPU 124 of the satellite PC (B) 62 transmits the information of the run registered race ID, the run registered horses ID and the run registered jockeys ID to the main cabinet 30 and the other satellites 60 (Step B216).

The CPU 124 of the main PC 32 receives the data from the satellite cabinet (B) 60 (Step M210), and prepares race run data (Step M211) and registers the prepared race run data in the race run table (Step M212).

Thus, the race run registration processing is completed.

Medals may be paid as ride money to a player owning the user jockey the ride request has been made for. The processing for paying this medal payment will be explained with reference to Steps M213 to M215 and Step A203 of FIG. 15.

After the CPU 124 of the main PC 32 has executed the race run data registration processing in Step M212, the CPU 124 of main PC 32 produces a medal payment signal of paying a ride money to the user jockey the ride request has been made for, referring to the jockey database, the race run table and the satellite correspondence table (Step M213). Here, 5 medals are paid as the ride money. Five medals are paid to the player owning the jockey for which the ride request has been made and logging in the satellite cabinet (A) 60 and to the player who has logged in the satellite cabinet (C) 60.

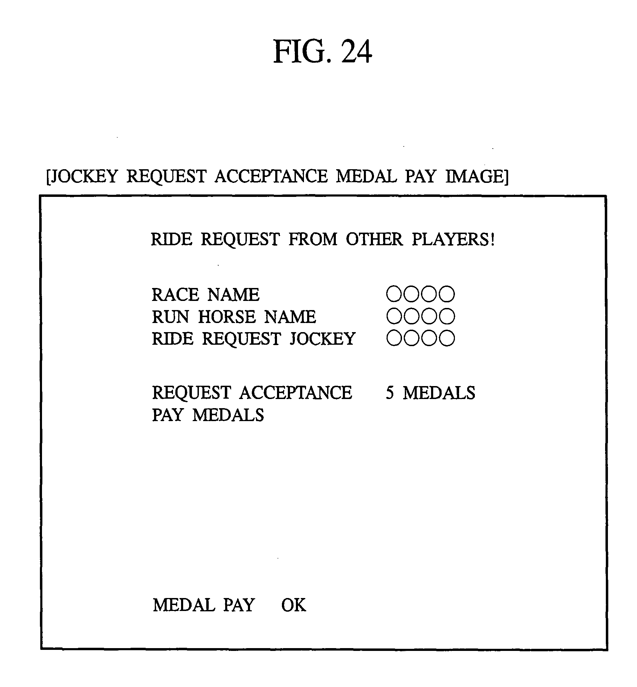

On the other hand, when the CPU 124 of the satellite PC (A) 62 receives the data from the satellite cabinet (B) 60 (Step A201), the CPU 124 of the satellite (A)62 confirms that a ride request has been made for its own jockey and displays a jockey ride request acceptance medal payment image of FIG. 24. In the image, "A ride request has been made from another player!" is displayed, a run race name, run horse names and the ride requested jockey names are displayed, and 5 medals as the jockey request acceptance money are displayed.

The CPU 124 of the main PC 32 transmits a medal payment signal to the logging-in user (Step M214), and the CPU 124 of the satellite PC (A)62 confirms the operational input of the medal payment OK by the player and pays 5 medals as the jockey request acceptance money (Step A203).

Furthermore, the CPU 124 of main PC 32 confirms based on the satellite correspondence table that the user is an absent user and records 5 medals as the absent user owning jockey request money in the in-absence obtained medal column of the jockey in the jockey database (Step M215).

### (Race Run Registration Processing: Combinations of CPU horses with User Jockeys)

The race run registration processing for, when a CPU horse prepared by the game system is registered, a jockey owned by a player riding the CPU horse will be explained with reference to the flow charts of FIGs. 14 and 15.

This processing is different from the above-described processing for the combination of a user horse with a user jockey in that, in this processing, the game system selects a run CPU horse out of the registered CPU horses, and the game system selects a ride jockey out of registered jockeys owned by players, but the rest processing is the same as the above-described processing.

The game system selects a run CPU horse, and accordingly, Steps B202, B203, B204, B205, B207, B208 and B209 executed by the CPU 124 of the satellite PC (B) 62 are not executed.

In Step M202, the CPU 124 of the main PC 32 selects a run CPU horse for each race, registers the run CPU horse in the race run table, turns on the run race flag of the CPU horse in the horse database and registers the race ID.

The game system selects a user jockey who rides the CPU horse, and accordingly, Steps B210, B211, B212, B213, B214, B215 and B216 executed by the CPU 124 of the satellite PC (B)62 in FIGs. 14 and 15 are not executed.

The CPU 124 of the main PC 32 selects out of the user jockeys listed up in Steps M207 and M208 in accordance with a prescribed algorithm (the step is not illustrated).

When the game system requests a user jockey of the player logging in the satellite cabinet (A) 60 to ride the CPU horse, the CPU 124 of the main PC 32 transmits the data of the race ID, the horse ID, the jockey ID, etc. to the satellite cabinet (A) 60 (the step is not illustrated).

The CPU 124 of the satellite PC (A) 62 receives the data from the main cabinet 30 (the step is not illustrated), displays the jockey ride request OK and pays medals corresponding to the jockey request acceptance money.

When the game system requests a user jockey owned by a player who does not log in to ride the CPU horse, the CPU 124 of the main PC 32 registers medals corresponding to the absent user's own jockey ride request in the jockey database, as in Step M215.

### (Race Processing)

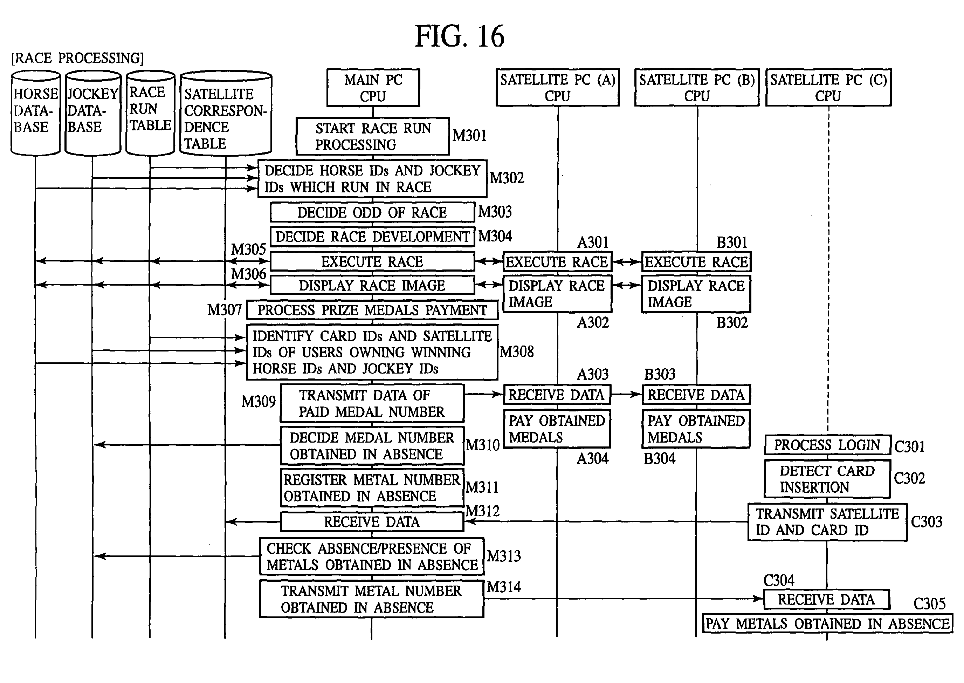

The race processing of the race game machine will be explained with reference to the flow chart of FIG. 16. Here in the explanation, the race processing follows the race run registration processing illustrated in FIGs. 14 and 15.

The CPU 124 of the main PC 32 starts the race run processing (Step M301).

First, the CPU 124 of the main PC 32 decides horse IDs and the jockey IDs which will run in the race, based on the horse database, the jockey database and the race run table (Step M302).

Next, the CPU 124 of the main PC 32 decides odds for the race (Step M302) and decides the race development (Step M304). The details of this processing will not be explained.

Subsequently, the CPU 124 of the main PC 32, the CPU 124 of the satellite PC (A) 62 and the CPU 124 of the satellite PC (B) 62 execute the race (Step M305, A301 and B301) and display the race image (Step M306, A302 and B302). The details of this processing will not be explained.

Then, the CPU 124 of the main PC 32 makes the processing for paying prize medals, based on a result of the race (Step M307). First, the CPU 124 of the main PC 32 identifies the winning horse IDs, the card IDs of the users owning the winning horses, and the satellite IDs, based on the horse database, the jockey database, the race run table and the satellite correspondence table (Step M308).

Subsequently, the CPU 124 of the main PC 32 transmits data of paid medal numbers as prize medals to the satellite cabinets 60 players are logging in (Step M310), and decides in-absence obtained medal numbers as prize medals for players who are not logging in (Step M310) and registers the in-absence obtained medal numbers in the jockey database at the in-absence obtained medal columns of the relevant jockeys (Step M311).

The CPU 124 of the satellite PC (A) 62 receives the paid medal number data transmitted from the main cabinet 30 (Step A303) and pays the obtained medals (Step A304). Similarly, the CPU 124 of the satellite (B) 62 receives the paid medal number data from the main cabinet 30 (Step B303) and pays the obtained medals (Step B304).

### (In-absence Obtained Medals Pay Processing)

Next, the processing for paying the in-absence obtained medals will be explained with reference to the flow chart of FIG. 16. Here in the explanation, a player who has set the in-absence ride request OK logs in the satellite cabinet (C) 60 after the race processing of FIG. 16.

When a player logs in the satellite cabinet (C) 60 with the IC card with which the player has set the in-absence ride request OK in FIG. 13, the CPU of the satellite PC (C) 62 starts the login processing (Step C301).

First, the CPU 124 of the satellite PC (C) 62 detects whether or not the IC card has been inserted (Step C302). When the CPU 124 of the satellite PC (C) 62 detects the insertion of the IC card, the CPU of the satellite PC (C) 62 transmits memory contents, such as the card ID, etc., read from the IC card, and its own satellite ID to the main PC 32 of the satellite IC (Step C303).

The CPU 124 of the main PC 32 receives the memory contents, such as the satellite ID, the card ID, etc., transmitted from the satellite cabinet (C) 60 (Step M312), stores the memory contents in the satellite correspondence table, corresponding to the satellite ID and the card ID and turns off the absence flag.

Next, the CPU 12 of the main PC 32 refers to the jockey database with the card ID of the inserted IC card as the key and checks whether or not the in-absence obtained medals are present (Step M313). When the in-absence obtained medals are present, the CPU 124 of the main PC 32 transmits the medal number to the satellite cabinet (C)60.

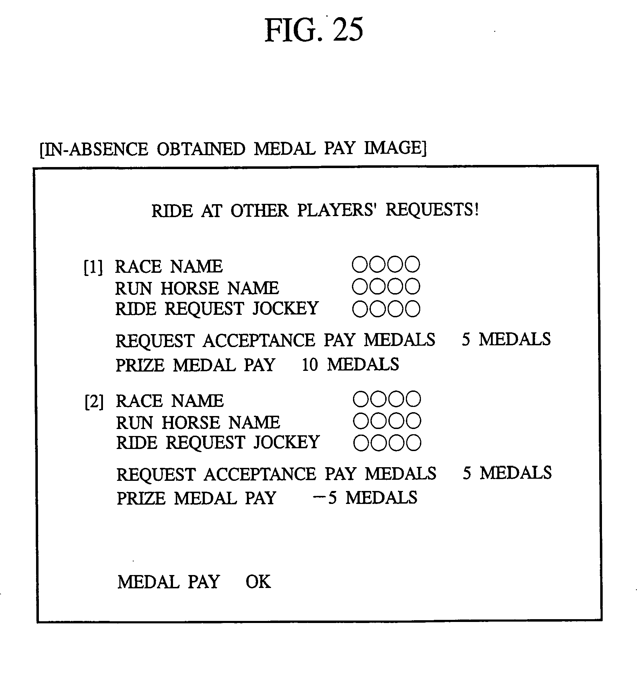

When the CPU 124 of the satellite PC (C) 62 receives the in-absence obtained medal number transmitted from the CPU 124 of the main PC 32 (Step C304), the CPU 124 of the satellite PC (C) 62 confirms the presence of the in-absence obtained medals and displays the image as exemplified in FIG. 25.

In the in-absence obtained medal paid image, "Ride at the requests of other players!" is displayed and also run race names, run horse names and ride requested jockey names are displayed for respective races, and the paid medal numbers for the request acceptances and prize medal numbers are displayed.

For example, in the first race, 5 medals for the request acceptance, and 10 medals as the prize medals may be paid. In the first race, 5 medals may be paid as the request acceptance, but when lost in the race, the payment of 5 medals may be demanded. Thus, it is possible that prize medals are paid, but when lost, a player must pay medals.

The CPU 124 of the satellite PC (C) 62 confirms the operational input of the medal payment OK by the player and pays the medals obtained in absence (Step C305).

Thus, the in-absence obtained medal payment processing is completed.

### (Combination of a Horse and a Jockey)

In the game system according to the present embodiment, a horse (the first race object) and a jockey (the second race object) are combined. This combination of the horse and the jockey is registered for the run in the race. This combination has the following cases.

For a player's own run horse, combinations are (1) a his own racehorse with his own jockey, (2) a his own run horse with a jockey selected by the race game machine, (3) his own racehorse with a jockey owned by another player participating in the present game, (4) his own racehorse with a jockey owned by another player who is not participating the present game, etc.

For a player's own jockey, combinations are (1) his own jockey with a racehorse owned by another player, (2) his own jockey at the time when the player is not participating in the game with a racehorse owned by another player, (3) his own jockey with a racehorse selected by the race game machine 10, (4) his own jockey at the time when the player is not participating in the game with a racehorse selected by the race game machine 10, etc.

### (Medal Distribution between Horse and Jockey)

In the game system according to the present embodiment, the payment computation for the bet game is made based on wins and loses. Based on kinds of the race (GI, GII, etc.) and places, a prize total (medal number) obtained by a combination of a horse and a jockey is decided. The prize total is distributed between the player owning the racehorse and the player owning the jockey, based on a preset ratio decided between them.

As for a player's own run horse, for the combination (1) of his own racehorse and his own jockey, all the prize medals are distributed to the player owning the run horse.

For the combination (2) of his own run horse with a jockey selected by the race game machine 10, a distribution of all the prize medals for the run horse, e.g., 60% of all the prize medals is given to the player owning the run horse, and a distribution of all the prize medals for the jockey, e.g., 40% of all the prize medals is given to none of the players.

For the combination (3) of his own racehorse with a jockey owned by another player participating in the present game, a distribution of all the prize medals for the run horse, e.g., 60% of all the prize medals is given to the player owning the run horse, and a distribution of all the prize medals for the jockey, e.g., 40% of all the prize medals is given to the player owning the jockey.

For the combination (4) of his own racehorse with a jockey of another player who is not participating in the present game, a distribution of all the prize medals for the run horse, e.g., 60% of all the prize medals is given to the player owning the run horse, and a distribution of all the prize medals for the jockey, e.g., 40% of all the prize medals is given to the player owning the jockey.

As for his own jockey, for the combination (1) of his own jockey with a racehorse owned by another player, a distribution of all the prize medals for the jockey, e.g., 40% of all the prize medals is given to the player owning the jockey, and a distribution of all the prize medals for the run horse, e.g., 60% of all the prize medals is given to the player owning the run horse.

For the combination (2) of his own jockey at the time when the player is not participating the game with a racehorse owned by another player, a distribution of all the prize medals for the jockey, e.g., 40% of all the prize medals is given to the player owning the jockey, and a distribution of all the prize medals for the run horse, e.g., 60% of all the prize medals is given tot he player owning the run horse.

For the combination (3) of his own jockey with a racehorse selected by the race game machine 10, a distribution of all the prize medals for the jockey, e.g., 40% of all the prize medals s given to the player owning the jockey, and a distribution of all the prize medals, e.g., 60% of all the prize medals is given to none of the players.

For the combination (4) of his own jockey at the time when the player is not participating in the game with a racehorse selected by the race game machine 10, a distribution of all the prize medals for the jockey, e.g., 40% of all the prize medals is given to the player owning the jockey, and a distribution of all the prize medals for the run horse, e.g., 60% of all the prize medals is given none of the players.

The ratio of the distribution between a run horse and a jockey may be different from the above. The distribution ratio may be decided based on parameters of a run horse and a jockey who are combined. The distribution ratio may be changed depending on kinds of the race.

### (Change of Ability Parameters of Horse and Jockey)

When a horse runs in a race, the ability parameters of the horse are changed, depending on a result of the race. The ability parameters of the horse are changed, depending on kinds (GI, GII, etc.) of the race and places. The abilities change by the CPU 124 of the main PC 32 rewriting the data in the columns of the horse data of the horse database corresponding to a user horse.

In the game system according to the present embodiment, the ability parameters of even a jockey riding a horse are changed, depending on a result of a race. The CPU 124 of the main PC 32 rewrites the data in the jockey data column of the jockey database corresponding to a user jockey to thereby change the ability parameters.

The change of the ability parameters of a jockey is the same not only when a player's own jockey rides his own racehorse, but also when a ride request OK is set, and a ride request of another player is accepted, and when a ride request of the game system for riding a CPU horse is accepted.

When a ride request is made from another player, as described above, prescribed medals can be paid, and when the jockey wins the race, a prescribed ratio of all the prize medals can be given.

However, this permits a player to obtain medals without any risk as long as a ride request OK is set for a jockey, which unbalances the game. Then in the game system according to the present embodiment, the ability parameters of a jockey are changeable, depending on a race result.

Accordingly, when a player who has set the in-absence ride request OK again logs in, in one case, the player can obtain medals, depending on a result of a race made in absence, and in the other case, the ability parameters of a jockey are only lowered without obtaining any medal, which makes the game balanced.

### [Modified Embodiments]

The present invention is not limited to the above-described embodiment and can over other various modifications.

For example, in the above-described embodiment, racehorses which are running objects are displayed in images, but the running objects may be miniature horses.

In the above-described embodiment, the present invention is applied to a horse race game. However, the present invention is applicable not only to the horse race game in which the running objects are horses, but also to other race games and common games. For example, the present invention is applicable to cycle races, in which the running objects are bicycles, boat races, in which the running objects are boats. The present invention is applicable to games in which virtual lives race.

In the above-described embodiments, the present invention is applied to the medal game system using medals, but may be applied to game systems using currents which function as the current means and pay means or to game systems using virtual currencies other than medals.

In the above-described embodiment, in the race game combining horses and jockeys, the ride request is made for the jockey who is one party of a combination, but may be made for the horse who is one party of a combination. A player sets whether or not run requests for the horses he owns to be accepted when he logs in or off, and other players make run request for the horses.

In the above-described embodiment, the satellite correspondence table of FIG. 11 is prepared to compare the satellite IDs to the card ID, but this is not essential. For example, players may be identified not with the satellite IDs but with the card IDs in exchanging data between the main device and the satellite devices.

In the above-described embodiment, the horse data, the jockey data, etc. are stored in the main device. However, the horse data, the jockey data, etc. may be stored in a server provided separate. For example, it is possible that the control unit of the main device accesses the memory of the server to read the data of the jockey IDs with the flags of the in-absence request acceptance OK turned on and prepares a ride-ready jockeys list.

In the above-described embodiment, players are identified with the IC cards, but may be identified with information memory mediums other than IC cards, magnetic cards, etc. Furthermore, without using cards, the IDs of players may be registered together with passwords. When a player logs in again, the player may be identified with the ID and the password.

In the above-described embodiment, all or part of the processing made by the control unit of the main device may be made by the control unit of the server or the control units of the satellite devices.

The main device of the above-described embodiment may be replaced with a server device, and the satellite devices may be replaced with client devices, such as home video game machines, PCs, PDAs, mobile phones, PHSs, etc., and, in place of medals, the game values may be information, data or others, such as parameters representing virtual currents points, or others usable in the game.

### INDUSTRIAL APPLICABILITY

The present invention is applicable to a arcade video game machine of a game system wherein a bet race game in which, in a race, places of racehorses which are running objects having the runs controlled by the control unit are anticipated to bet medals, and allotments are paid based on a race result, and a training game in which racehorses and jockeys for races are owned and trained, and are participated in races to thereby obtain medals as horse owner prices corresponding to places are made. The present invention is applicable also to domestic game machines and portable game machines which can realize the game system.

## Claims

1. A game system in which information is exchangeable between a main device and a plurality of satellite devices, and a plurality of race objects each combining a first race object and a second race object are participated and compete in a race,
the main device comprising:
a control means which executes race game processing for, before a race, deciding a plurality of race objects each combining a first race object and a second race object to compete places among a plurality of race objects, and pay processing for paying game values, based on a result of the race,
the satellite devices each comprising:
a control means which executes processing for, based on an operational signal from an operation means operated by a player, deciding a second race object the player permits to participate in the race, and transmitting to the main device the information of the decided second race object,
the control means of the main device executing:
the race game processing for including a race object combining a second race object decided based on the information of the second race object transmitted from the satellite device and a first race object selected from said a plurality of first objects among a plurality of race objects to compete for places among said plurality of race objects; and
the pay processing for, as a result of the race, when said race object included among said plurality of race objects wins, paying a part of a game value to be paid to said race object for the win to the second race object of said race object.

2. A game system in which information is exchangeable between a main device and a plurality of satellite devices,
the main device comprising:
a first race object database storing first identification information of first race objects, and their corresponding ability parameters;
a second race object database storing second identification information of second race objects, and their corresponding ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object, and registering the combination in the race participation registration database;
a race game control means for, each race, executing a race game processing for deciding places in the race and developments of the race by using the ability parameters corresponding to the first identification information and the ability parameters corresponding to the second identification information of the combination registered in the race participation registration database; and
pay processing control means for executing a pay processing for paying a play value based on a race result, and
the satellite device each comprising
a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the main device,
the main device further comprising
a second race object registration control means for registering the permission information of permitting the second race object of the decided second identification information to be registered in the race participation registration database in the second race object database, corresponding to the second identification information transmitted from the satellite,
the race participation registration control means selecting the second identification information combined with the first identification information selected from the first race object database, among the second identification information having said permission information registered in the second race object database, and registering a plurality of combinations including said combination in the race participation registration database, and
the pay processing control means, when said combination including the second identification information registered having said permission information registered wins as a result of the race game processing by the race game control means, deciding a distribution play value of a play value to be paid to the combination, said distribution being to be paid to the second identification information having said permission information registered.

3. A game system in which information is exchangeable between a main device and a plurality of satellite devices,
the main device comprising:
a first race object database storing first identification information of first race objects, and their corresponding ability parameters;
a second race object database storing second identification information of second race objects, and their corresponding ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object, and registering the combination in the race participation registration database;
a race game control means for, each race, executing a race game processing for deciding places in the race and developments of the race by using the ability parameters corresponding to the first identification information and the ability parameters corresponding to the second identification information of the combination registered in the race participation registration database; and
pay processing control means for executing a pay processing for paying a play value based on a race result, and
the satellite device each comprising
a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the main device,
the main device further comprising
a second race object registration control means for registering the permission information of permitting the second race object of the decided second identification information to be registered in the race participation registration database in the second race object database, corresponding to the second identification information transmitted from the satellite,
the race participation registration control means selecting the second identification information combined with the first identification information selected from the first race object database, among the second identification information having said permission information registered in the second race object database, and registering a plurality of combinations including said combination in the race participation registration database,
the pay processing control means, when said combination including the second identification information registered having said permission information registered wins as a result of the race game processing by the race game control means, deciding a distribution play value of a play value to be paid to the combination, said distribution being to be paid to the second identification information having said permission information registered, and
the second race object registration control means registering the distribution play value decided by the pay processing control means in the second race object database, corresponding to the second identification information having said permission information registered.

4. A game system in which information is exchangeable between a main device and a plurality of satellite devices,
the main device comprising:
a first race object database storing first identification information of first race objects, and their corresponding ability parameters;
a second race object database storing second identification information of second race objects, and their corresponding ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object, and registering the combination in the race participation registration database;
a race game control means for, each race, executing a race game processing for deciding places in the race and developments of the race by using the ability parameters corresponding to the first identification information and the ability parameters corresponding to the second identification information of the combination registered in the race participation registration database; and
pay processing control means for executing a pay processing for paying a play value based on a race result, and
the satellite device each comprising
a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the main device,
the main device further comprising
a second race object registration control means for registering the permission information of permitting the second race object of the decided second identification information to be registered in the race participation registration database in the second race object database, corresponding to the second identification information transmitted from the satellite,
the race participation registration control means selecting the second identification information combined with the first identification information selected from the first race object database, among the second identification information having said permission information registered in the second race object database, and registering a plurality of combinations including said combination in the race participation registration database,
the pay processing control means further executing
the processing for, when said combination including the second identification information registered having said permission information registered wins as a result of the race game processing by the race game control means, deciding a distribution play value of a play value to be paid to the combination, said distribution play value being to be paid to the second identification information having said permission information registered, and
the processing for paying the decided distribution play value to the second race object of the second identification information having said permission information registered.

5. A game system in which information is exchangeable between a main device and a plurality of satellite devices,
the main device comprising:
a first race object database storing first identification information of first race objects, and their corresponding ability parameters;
a second race object database storing second identification information of second race objects, and their corresponding ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object, and registering the combination in the race participation registration database;
a race game control means for, each race, executing a race game processing for deciding places in the race and developments of the race by using the ability parameters corresponding to the first identification information and the ability parameters corresponding to the second identification information of the combination registered in the race participation registration database; and
pay processing control means for executing a pay processing for paying a play value based on a race result, and
the satellite device each comprising
a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the main device,
the main device further comprising
a second race object registration control means for registering the permission information of permitting the second race object of the decided second identification information to be registered in the race participation registration database in the second race object database, corresponding to the second identification information transmitted from the satellite,
the satellite device further executing
the processing for, based on an operational signal from an operation means operated by a player, deciding first identification information of a first race object to be selected by the control of the race participation registration control means and registered in the race participation registration database,
the processing for receiving from the main device the second identification information of a plurality of second race objects including the second race object having the permission information, the second race objects being registered in the second race object database,
the processing for deciding second identification information of a second race object to be combined with the first race object of said decided first identification information among the received second identification information of the plurality of second race objects, and
the processing for transmitting to the main device the combination of the first identification information and the second identification information, which has been decided by such processing, and the registration request of the combination in the race participation registration database,
the race participation registration control means selecting the combination of the first identification information and the second identification information transmitted from the satellite control means, and registering a plurality of combinations including said combination in the race participation registration database,
the pay processing control means further executing
the processing for, when the combination including the second identification information registered having said permission information registered wins as a result of the race game processing by the race game control means, deciding a first distribution play value and a second distribution play value of a play value to be paid to the combination, said first distribution play value being to be paid to the first race object, said second distribution play value being to be paid to the second identification information having said permission information registered, and
the processing for paying the decided first distribution play value to the first race object of the first identification information for which said the registration request has been made.

6. A game system **characterized in that** information can be exchanged between a main device and a plurality of satellite devices,
the main device comprising:
a first race object database storing first identification information of a first race object, corresponding to ability parameters;
a second race object database storing second identification information o a second race object, corresponding to ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object and registering the combination in the race participation registration database;
a race game control means for, each race, making race game processing by deciding a place in the race and developments of the race by using the ability parameters corresponding to the first identification information and the ability parameters corresponding to the second identification information, of the combination registered in the race participation registration database; and
pay processing control means for paying a play value, based on a race result, and
the satellite device each comprising
a satellite control means for, based on an operational signal from an operational means operated by a player. executing the processing for deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information,
the main device further comprising:
a second race object registration control means for registering the permission information of permitting the second race object of the decided second identification information to be registered in the race participation registration database in the second race object database, corresponding to the second identification information transmitted from the satellite,
the satellite device further executing
the processing for, based on an operational signal from an operation means operated by a player, deciding first identification information of a first race object to be selected by the control of the race participation registration control means and registered in the race participation registration database,
the processing for receiving from the main device the second identification information of a plurality of second race objects including the second race object registered having the permission information registered,
the processing for deciding second identification information of a second race object to be combined with the first race object of said decided first identification information from the received second identification information of a plurality of second race objects, and
the processing for transmitting to the main device the combination of the first identification information and the second identification information, which has been decided by such processing, and commanding the registration of the combination in the race participation registration database,
the race participation registration control means selecting the first identification information and the second identification information transmitted from the satellite control means and registering a plurality of combinations including said combination in the race participation registration database,
the pay processing control means executing
the processing for, when the combination including the second identification information having the permission information registered wins as a result of race game processing by the race game control means, deciding a first distribution game value of a game value to be paid to the combination, which (distribution) is to be paid to be the first race object and a second distribution game value of said game value to be paid to the second identification information, and
the processing for paying the decided first distribution game value to the first game object of the first identification information for which said registration command has been made,
the second race object registration control means registering the second distribution play value decided by the pay processing control means in the second race object database, corresponding to the second identification information having said permission information registered.

7. A game system **characterized in that** information can be exchanged between a main device and a plurality of satellite devices,
the main device comprising:
a first race object database storing first identification information of a first race object, corresponding to ability parameters;
a second race object database storing second identification information o a second race object, corresponding to ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object and registering the combination in the race participation registration database;
a race game control means for, each race, making race game processing by deciding a place in the race and developments of the race by using the ability parameters corresponding to the first identification information and the ability parameters corresponding to the second identification information, of the combination registered in the race participation registration database; and
pay processing control means for paying a play value, based on a race result, and
the satellite device each comprising
a satellite control means for, based on an operational signal from an operational means operated by a player. executing the processing for deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information,
the main device further comprising:
a second race object registration control means for registering the permission information of permitting the second race object of the decided second identification information to be registered in the race participation registration database in the second race object database, corresponding to the second identification information transmitted from the satellite,
the satellite device further executing
the processing for, based on an operational signal from an operation means operated by a player, deciding first identification information of a first race object to be selected by the control of the race participation registration control means and registered in the race participation registration database,
the processing for receiving from the main device the second identification information of a plurality of second race objects including the second race object registered having the permission information registered,
the processing for deciding second identification information of a second race object to be combined with the first race object of said decided first identification information from the received second identification information of a plurality of second race objects, and
the processing for transmitting to the main device the combination of the first identification information and the second identification information, which has been decided by such processing, and commanding the registration of the combination in the race participation registration database,
the race participation registration control means selecting the first identification information and the second identification information transmitted from the satellite control means and registering a plurality of combinations including said combination in the race participation registration database,
the pay processing control means executing
the processing for, when the combination including the second identification information having the permission information registered wins as a result of race game processing by the race game control means, deciding a first distribution game value of a game value to be paid to the combination, which (distribution) is to be paid to be the first race object and a second distribution game value of said game value to be paid to the second identification information,
the processing for paying the decided first distribution game value to the first game object of the first identification information for which said registration command has been made, and
the processing for paying the decided second distribution game value to the second game object of the second identification information having said permission information registered.

8. The game system according to any one of claims 2 to 7, wherein
the satellite control means executes
the processing for, based on an operational signal from the operation means operated by a player, deciding second identification information of the second race object to be selected by the control of the race participation registration control means to be registered in the race participation registration database, and
the processing for transmitting an in-absence permission information and the second identification information to the main device, said in-absence permission information indicating that the second race object of the second identification information decided by the player may be registered in the race participation registration database even in the absence of the player,
the second race object registration control means
registering the in-absence permission information in the second race object database, corresponding to the second identification information transmitted from the satellite device.

9. The game system according to claim 8, wherein
the main device further executes
the processing for detecting whether or not the player who has transmitted the in-absence permission information is logging in,
when it is detected that the player is logging in, the pay processing control means executes the processing for paying a decided distribution play value to the second race object of the second identification information having the in-absence permission information registered, and
when it is detected that the payer is not logging in, the second race object registration control means registers the distribution play value decided by the pay processing control means in the second race object database, corresponding to the second identification information having the in-absence permission information registered.

10. The game system according to any one of claims 2 to 9, wherein
when a combination including second identification information including the permission information or the in-absence permission information wins as a result of the race game processing by the race game control means,
the main device renews the ability parameters corresponding to the second identification information of the second race object database to improved values, and
when the combination including the second identification information including the permission information or the in-absence permission information does not win as a result of the race game processing by the race game control means,
the main device renews the ability parameters corresponding to the second identification information of the second race object database to lowered values.

11. The game system according to any one of claims 2 to 10, wherein
the satellite control means transmits to the main device, permission condition information of conditions for the permission together with the second identification information and the permission information or the in-absence permission information, which permits the registration in the race participation database, and
the race participation registration control means selects, when second identification information to be combined with first identification information selected from the first race object database, selects the second identification information, based on the permission condition information.

12. A game system in which information is exchanged between a server device and a plurality of client devices via a network, and a race game is made among a plurality of combinations of a first race object and a second race object,
the server device comprises
a control means which executes the race game processing for, before a race, deciding a plurality of combinations each of the first race object and the second race object, and racing for places, and the pay processing for paying play values, based on a result of the race,
the client device each comprising
a control means which execute the processing for, based on an operation signal from an operation means operated by an operator, deciding a second race object which the operator permits to participate in the race and transmitting to the server device information of the decided second race object,
the control means of the server device executes
the race game processing for racing a combination of a second race object decided based on the information of the second race object transmitted from the client device and a first race object selected from a plurality of first race objects among a plurality of combinations for places, and
the pay processing for paying, when said combination raced among said a plurality of the combinations wins as a result of the race, paying a part of a play value to be paid for the win to the second race object.

13. A game system in which information is exchangeable between a server device and a plurality of client devices,
the server device comprising:
a first race object database storing first identification information of first race objects, and their corresponding ability parameters;
a second race object database storing second identification information of second race objects, and their corresponding ability parameters;
race participation registration database for registering for each race a combination of the first identification information of a first race object to be participated in the race and the second identification information of a second race object;
a race participation registration control means for, before a race, selecting the first identification information from the first race object database, selecting the second identification information from the second race object database to decide a combination of the first race object and the second race object, and registering the combination in the race participation registration database;
a race game control means for, each race, executing a race game processing for deciding places in the race and developments of the race by using the ability parameters corresponding to the first identification information and the ability parameters corresponding to the second identification information of the combination registered in the race participation registration database; and
pay processing control means for executing a pay processing for paying a play value based on a race result, and
the client device each comprising
a satellite control means for executing the processing for, based on an operational signal from an operational means operated by a player, deciding the second identification information of a second race object which is to be selected by the control of the race participation registration control means to be registered in the race participation registration database, and the processing for transmitting a permission information of permitting the second race object of the decided second identification information to be registered in the race participation registration database, and the second identification information, to the server device,
the server device further comprising
a second race object registration control means for registering the permission information of permitting the second race object of the decided second identification information to be registered in the race participation registration database in the second race object database, corresponding to the second identification information transmitted from the satellite,
the race participation registration control means selecting the second identification information combined with the first identification information selected from the first race object database, among the second identification information having said permission information registered in the second race object database, and registering a plurality of combinations including said combination in the race participation registration database, and
the pay processing control means, when said combination including the second identification information registered having said permission information registered wins as a result of the race game processing by the race game control means, deciding a distribution play value of a play value to be paid to the combination, said distribution being to be paid to the second identification information having said permission information registered.
